# EUROPEAN PATENT APPLICATION

(11) **EP 4 790 537 A1**
(43) Date of publication of application: **12.08.2026**
(21) Application number: 26153622.1
(22) Date of filing: 22.01.2026
(51) Int. Cl.: G06F 3/12, H04L 51/02, G06N 3/0475

(54) **INFORMATION PROCESSING METHOD AND PROGRAM**

(30) Priority: 10.02.2025 JP 2025020165; 25.03.2025 JP 2025049644
(71) Applicant: Canon Kabushiki Kaisha, Tokyo, 146-8501 (JP)
(72) Inventor: MINAGI, Hoshito, Tokyo, 146-8501 (JP)
(74) Representative: Canon Europe Limited

(57) **Abstract**

A program includes acquiring a file, receiving, in response to a user entering natural-language text into a first entry field, a first setting that is based on the entered natural-language text and is to be used to print the acquired file, displaying, in response to acquisition of the file and reception of the first setting, an object that does not include the first entry field and includes a second entry field for receiving information regarding the acquired file and natural-language text for setting a second setting to be used to print the file from the user, and setting the second setting that is to be used to print the acquired file and based on the natural-language text in the second entry field entered by the user.

## Description

### Technical Field

The present disclosure relates to an information processing method, a (computer) program and a storage medium.

### BACKGROUND

Japanese Patent Laid-Open Publication No. 2020-52507 describes a technique for issuing an instruction to set print settings or execute printing by a user having a conversation in a natural language with a chat bot.

There is a case where a user wishes to finely specify print settings when a file is printed, using a natural language. In a case where print settings are made using the technique described in Japanese Patent Laid-Open Publication No. 2020-52507, the user exchanges chat with the chat bot with respect to each setting item, whereby the user can specify the settings of the setting items and set the print settings. Also, in a case where the user sets print settings in a natural language using artificial intelligence (Al), the user can similarly set the settings.

However, since Al can exchange not only print settings but also a variety of pieces of information with the user, there is a case where Al has difficulty identifying to what an instruction in natural-language text entered by the user is issued. As a specific example, even in a case where the user specifies print settings in a natural language for an already uploaded file to change its print settings and perform printing, there is a case where Al cannot identify for which file as a target the user specifies the print settings.

### SUMMARY

The present disclosure in its first aspect provides a an information processing method as specified in claim 1. Optional features of the first aspect are specified in claims 2 to 19. Optional features of the first aspect are also optional features of the other aspects of the present disclosure.

The present disclosure in its second aspect provides a computer program as specified in claim 20.

The present disclosure in its third aspect provides a computer-readable data carrier having stored thereon the computer program.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of a network configuration according to the present disclosure.
Fig. 2A is a diagram illustrating an example of a hardware configuration of a computer, Fig. 2B is a diagram illustrating an example of a hardware configuration of a plugin server, Fig. 2C is a diagram illustrating an example of a hardware configuration of an artificial intelligence (AI) assistant server, and Fig. 2D is a diagram illustrating an example of a hardware configuration of an external system server.
Fig. 3A is a diagram illustrating an example of a software configuration of an application, Fig. 3B is a diagram illustrating an example of a software configuration of an AI assistant, Fig. 3C is a diagram illustrating an example of a software configuration of a plugin, Fig. 3D is a diagram illustrating an example of a plugin manifest, and Fig. 3E is a diagram illustrating an example of a software configuration of the plugin server.
Figs. 4A to 4D are diagrams each illustrating an example of a posted card.
Figs. 5A to 5F are diagrams each illustrating an example of the posted card.
Fig. 6A is a sequence diagram illustrating an example of a plugin calling process, Fig. 6B is a flowchart illustrating an example of a card creation process, and Fig. 6C is a sequence diagram illustrating an example of a plugin calling process when the card is updated.
Figs. 7A and 7B are diagrams illustrating an example of an instruction sentence for generating print settings.
Fig. 8A is a diagram illustrating an example of a card template, and Fig. 8B is a diagram illustrating examples of definitions used to hand over parameters.
Fig. 9 is a diagram illustrating an example of a network configuration according to a second embodiment.
Fig. 10 is a diagram illustrating an example of a software configuration of an application according to the second embodiment.
Fig. 11 is a sequence diagram illustrating an example of a plugin calling process by the application according to the second embodiment.
Fig. 12A is a diagram illustrating a card in a case where a search for a file content is successful according to a third embodiment, and Fig. 12B is a diagram illustrating the card in a case where a search for a file content fails according to the third embodiment.
Fig. 13A is a sequence diagram illustrating a plugin calling process according to the third embodiment, and Fig. 13B is a flowchart illustrating an example of a card creation process according to the third embodiment.

### DESCRIPTION OF THE EMBODIMENTS

Hereinafter, embodiments for carrying out the present disclosure will be described with reference to the drawings. The following embodiments are not intended to limit the disclosure according to the claims, and not all combinations of features described in the embodiments are necessarily essential to the means for solving the issues of the disclosure.

In the present embodiment, "generative artificial intelligence (Al)" refers to a technique for automatically generating a variety of contents such as text, an image, music, video, and the like similar to those created by people. The generative Al does not execute processing according to a rule determined in advance as conventional Al does, but generates these contents based on knowledge learned using deep learning.

At the same time, in the present embodiment, for example, an "Al assistant" refers to a thing that receives an entry in a natural-language format through a chat field (an entry field) of an application and displays a response to the entry generated using the generative Al in the chat field of the application.

In the present embodiment, the entry in the natural-language format is occasionally referred to as a "prompt 3100". The specifications of the prompt 3100 are not particularly limited, and conform to the specifications of each AI assistant. For example, a user can also attach an image file and a document file to the prompt 3100.

In the present embodiment, the "natural-language format" refers to the format of a conversation ordinarily conducted by people, such as "Tell me tomorrow's weather in Tokyo". For example, the natural-language format does not require ingenuity for providing entry separated by words, such as "Tokyo weather tomorrow" or the like entered in a web search, and therefore has the advantage of being able to be operated more easily.

In the present embodiment, a "card" is a form of a post (a display), and for example, refers to a thing including information such as text, an image, and the like and an object for the user having checked a product to issue an instruction to perform an additional operation. The displayed contents of the card are updated according to an operation of the user. For example, the information and the object are displayed in a common display area.

In the present embodiment, LLM is the abbreviation of large language model.

### [First Embodiment]

### <System Configuration>

A first embodiment of the present disclosure is described below.

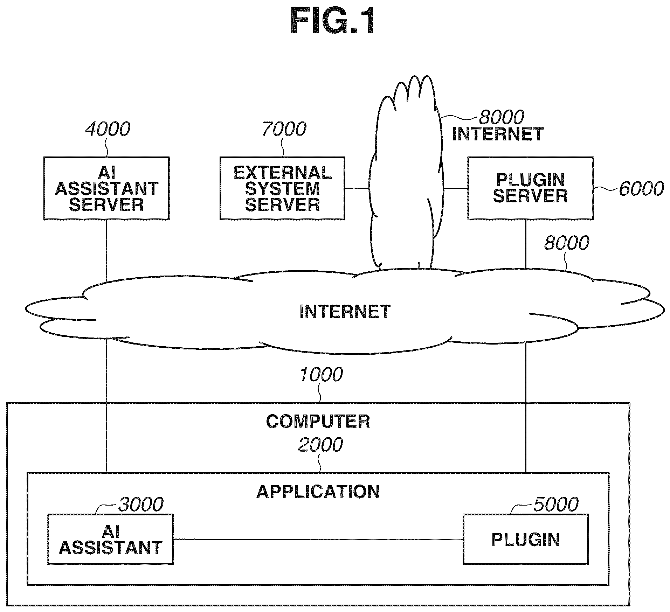

Fig. 1 illustrates an example of the configuration of a system according to the present embodiment. A network configuration diagram according to the present embodiment includes a computer 1000 that is a terminal apparatus, an Al assistant server 4000, a plugin server 6000, and an external system server 7000. Further, these apparatuses are connected together via the Internet 8000 so that the apparatuses can communicate with each other.

The computer 1000 includes an application 2000. The application 2000 includes an Al assistant 3000 and a plugin 5000.

For example, the computer 1000 is placed in an office and connected to the Internet 8000 outside the office via a company network (not illustrated) and a router (not illustrated) so that the computer 1000 can communicate with the Internet 8000. The computer 1000, the Al assistant server 4000, the plugin server 6000, and the external system server 7000 are examples of an information processing apparatus. The computer 1000 is also an example of a user terminal.

The application 2000 is an application that operates on the computer 1000. The application 2000 has the Al assistant 3000. Further, the application 2000 can extend the functions of the application 2000 by adding the plugin 5000.

In the present disclosure, the "plugin 5000" refers to a thing that provides the function of communicating with the plugin server 6000 and executing any processing and mainly uses generative Al in the processing process. The generative Al, however, may not necessarily be used in the processing process. The plugin 5000 can be called by a user operation on the application 2000 and can also be called from the AI assistant 3000. Further, the plugin 5000 can also provide information acquired via the plugin server 6000 as an additional information source for the Al assistant server 4000 to generate a response.

The Al assistant server 4000 has the function of, in response to a prompt 3100 entered to the Al assistant 3000 on the application 2000, generating a response to the prompt 3100 mainly using a generative Al model specialized in natural-language processing, such as an LLM or the like.

The plugin server 6000 has the function of executing any operation on the external system server 7000 according to the contents of communication with the application 2000. Further, the plugin server 6000 has the function of generating a product using any generative Al according to the contents of the prompt 3100, and the function of causing the Al assistant 3000 to post information at least including the product of the generative Al as a card 3200.

In the present embodiment, the card 3200 is an example of an object. The card 3200 displays a variety of pieces of information using objects such as a display field, an entry field, and buttons. Further, the user selects a button displayed on the card 3200, whereby the user can issue an instruction to execute processing corresponding to the selected button.

The external system server 7000 is connected to the plugin server 6000 via the Internet 8000 so that the external system server 7000 can communicate with the plugin server 6000. The external system server 7000 has the function of receiving an operation of the plugin server 6000.

The application 2000 may be a client application existing on the computer 1000, or may be a web application to which the computer 1000 can connect via the Internet 8000. The plugin 5000 may also be loaded onto the computer 1000, or may be loaded onto a web app, or may be loaded onto the AI assistant server 4000.

A function for the computer 1000 to communicate with the Al assistant server 4000 and the plugin server 6000 may be a function provided in the application 2000, or may be a function included in the Al assistant 3000 and the plugin 5000. The Al assistant 3000 and the plugin 5000 are called by the application 2000.

### <Hardware Configuration>

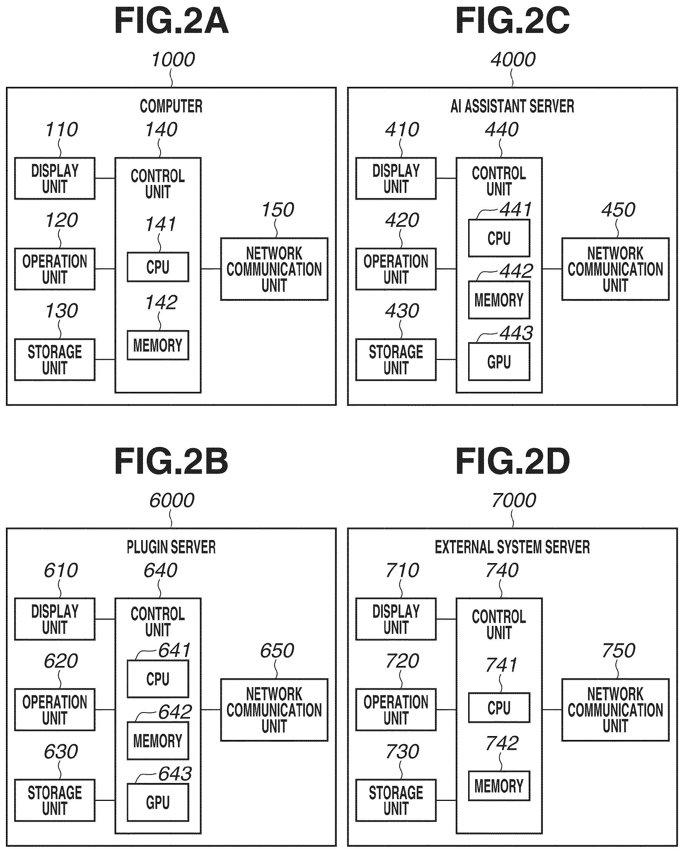

With reference to Figs. 2A to 2D, examples of the hardware configurations of the apparatuses included in the system according to the present embodiment are described.

Fig. 2A illustrates an example of the hardware configuration of the computer 1000. Fig. 2B illustrates an example of the hardware configuration of the plugin server 6000. Fig. 2C illustrates an example of the hardware configuration of the Al assistant server 4000. Fig. 2D illustrates an example of the hardware configuration of the external system server 7000.

The hardware configuration of the Al assistant server 4000 illustrated in Fig. 2C is similar to the hardware configuration of the plugin server 6000 illustrated in Fig. 2B. The hardware configuration of the external system server 7000 illustrated in Fig. 2D is similar to the hardware configuration of the computer 1000 illustrated in Fig. 2A. Thus, the hardware configurations of the Al assistant server 4000 and the external system server 7000 are not described in detail.

As illustrated in Fig. 2A, the computer 1000 includes a display unit 110, an operation unit 120, a storage unit 130, a control unit 140, and a network communication unit 150. These units are connected together so that the units can communicate with each other. For example, the computer 1000 is a desktop or laptop personal computer (PC), a tablet terminal, a smartphone, or the like. The control unit 140 includes a central processing unit (CPU) 141 and a memory 142 and controls the entirety of the computer 1000.

For example, the display unit 110 is composed of a display such as a liquid crystal panel or the like and can display an image, various screens, and the like. For example, the operation unit 120 is composed of a mouse, a keyboard, and the like and can receive an input operation of the user. The operation unit 120 may be composed of a touch panel or the like having the functions of the display unit 110 and the operation unit 120.

For example, the storage unit 130 is composed of a storage medium such as a hard disk, a solid-state drive (SSD), or the like and saves various programs (software) and the like required when the computer 1000 operates. The programs are loaded into the memory 142 where necessary and executed by the CPU 141. The programs include programs for causing the CPU 141 to execute the components and the functions of the application 2000.

These programs are not limited to those saved in the computer 1000. For example, the programs may be saved in an external apparatus capable of communicating with the computer 1000 that executes the application 2000, such as the AI assistant server 4000, the plugin server 6000, the external system server 7000, or the like. In this case, when executing the programs, the computer 1000 communicates with the external apparatus, accesses the programs, and executes processing.

The network communication unit 150 inputs and outputs data from and to an external apparatus via an external network. Consequently, the computer 1000 can exchange information with an external apparatus such as the Al assistant server 4000, the plugin server 6000, or the like via a network such as the Internet 8000 or the like.

As illustrated in Fig. 2B, the plugin server 6000 includes a display unit 610, an operation unit 620, a storage unit 630, a control unit 640, and a network communication unit 650. These units are connected together so that the units can communicate with each other.

The control unit 640 includes a CPU 641, a memory 642, and a graphics processing unit (GPU) 643 and controls the entirety of the plugin server 6000.

In the hardware configuration of the plugin server 6000, components similar to those of the computer 1000 are not described in detail.

The GPU 643 is a calculation unit composed of an image processing processor. For example, the GPU 643 executes calculation for converting data of an input image or input text using an LLM according to a control command issued by the CPU 641.

Although it is desirable that the plugin server 6000 and the AI assistant server 4000, which perform processing using generative AI, include the GPU 643 and a GPU 443, respectively, the effects of the present disclosure are exerted even with a configuration in which the GPUs 643 and 443 are not included.

### <Software Configuration>

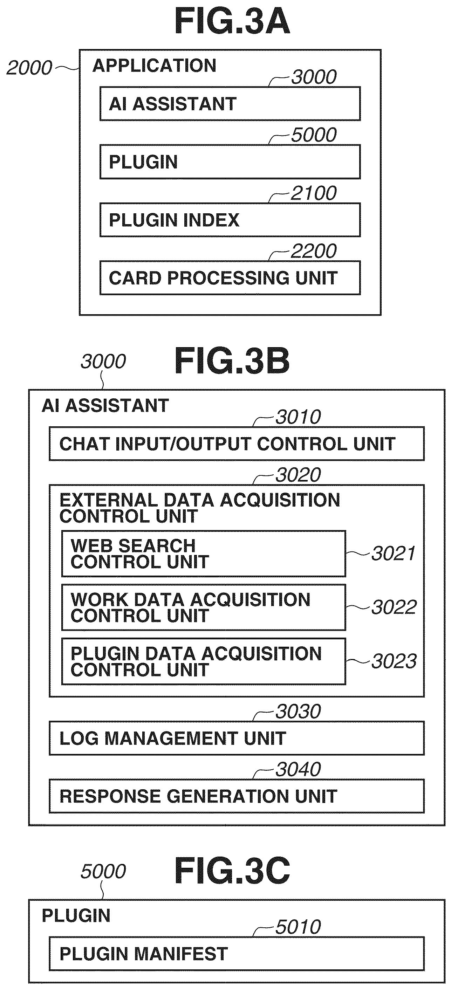

With reference to Figs. 3A to 3E, examples of the software configurations of the apparatuses according to the present embodiment are described.

Fig. 3A illustrates an example of the configuration of software modules related to the processing of the Al assistant 3000 and the plugin 5000 in the application 2000. Fig. 3B illustrates an example of the configuration of software modules related to a response generation process including the execution of the plugin 5000 in the Al assistant 3000. Fig. 3C illustrates an example of the software configuration of the plugin 5000.

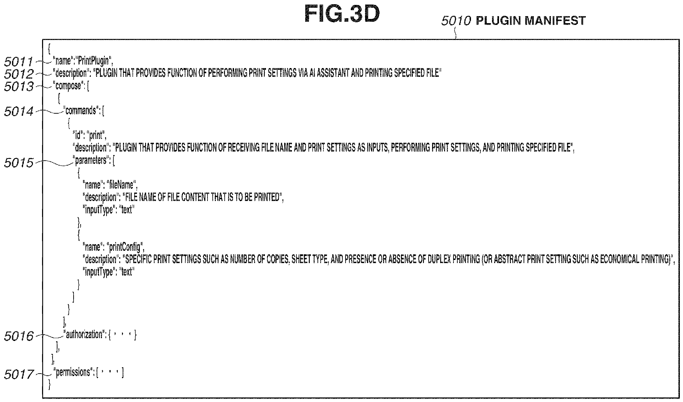

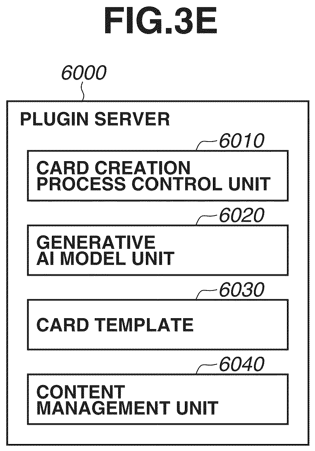

Fig. 3D illustrates an example of a plugin manifest 5010 in the plugin 5000. Fig. 3E illustrates an example of the software configuration of the plugin server 6000.

### <Software Configuration of Application 2000>

As illustrated in Fig. 3A, the application 2000 at least includes the Al assistant 3000, the plugin 5000, a plugin index 2100, and a card processing unit 2200. The names and the number of components are not limited to these, and a configuration may only need to be employed in which the functions of the present disclosure can be exerted. Examples of the application 2000 include a communication tool, an email system, document editing software, and the like.

The Al assistant 3000 provides the function of, in a case where the prompt 3100 is entered, returning a response to the entered prompt 3100. As illustrated in the following descriptions and the following figures, the Al assistant 3000 provides the function of displaying an exchange using the card 3200 or the like.

The plugin 5000 is software added for the purpose of extending the functions of the application 2000, and for example, provides the function of operating an external system such as various storage services, a mission critical system, or the like through the application 2000. A plurality of plugins 5000 can be provided in the application 2000, and the upper limit of the number of plugins 5000 that can be provided conforms to the specifications of the application 2000.

Further, the plugin 5000 can be called from the application 2000 and can also be called from the Al assistant 3000. The plugin 5000 is used as reference information for the Al assistant 3000 to generate a response to the prompt 3100. A plurality of commands may be present in a single plugin 5000, and the Al assistant 3000 may determine and call an appropriate command.

The method for calling the plugin 5000 is not particularly limited, and may be configured by the plugin 5000 called only from the application 2000 or the plugin 5000 called only from the Al assistant 3000. Alternatively, the method may be configured by the plugin 5000 compatible with calling from both the application 2000 and the Al assistant 3000.

The plugin index 2100 manages a list of plugin information regarding plugins 5000 provided in the application 2000. The plugin index 2100 may be a mere database. The plugin information is metadata including the name, descriptions (descriptions in the natural-language format), parameters, and the like of the plugin 5000 described in a plugin manifest 5010 of the plugin 5000. As the plugin information, an identifier (ID) assigned by the application 2000 or the like can also be additionally registered to manage the plugin 5000. Based on the plugin information, the AI assistant 3000 determines a plugin 5000 that is to be executed.

Based on an instruction input by the user through operation buttons 3250 in the card 3200, the card processing unit 2200 provides a communication function for causing the plugin server 6000 to perform an operation.

### <Software Configuration of AI Assistant 3000>

As illustrated in Fig. 3B, the AI assistant 3000 includes a chat input/output control unit 3010, an external data acquisition control unit 3020, a log management unit 3030, and a response generation unit 3040. The external data acquisition control unit 3020 includes a web search control unit 3021, a work data acquisition control unit 3022, and a plugin data acquisition control unit 3023.

The chat input/output control unit 3010 has the function of receiving the prompt 3100 (receiving an input) from the application 2000, and the function of transmitting an output generated via the Al assistant server 4000 to the application 2000.

The external data acquisition control unit 3020 has the function of acquiring additional information for a generative AI model unit 6020 to generate a response in processing in the response generation unit 3040.

The web search control unit 3021 provides the function of acquiring information present on the Web via a search engine. The work data acquisition control unit 3022 provides the function of acquiring a document and information created in daily work from cloud storage or a mission critical system cooperating with the application 2000. The plugin data acquisition control unit 3023 provides the function of cooperating with an external system that is not cooperating with the application 2000 or is also cooperating with the application 2000 to acquire information on the external system. The details of the processing of the plugin data acquisition control unit 3023 will be described below based on an example.

The log management unit 3030 has the function of saving and providing the prompt 3100 entered in the past by the user and a response output from the Al assistant 3000 as an operation log in the AI assistant 3000. The operation log saved in the log management unit 3030 is used as information for determining parameters when the plugin server 6000 is called, or for the Al assistant server 4000 to generate a response.

The response generation unit 3040 provides the function of communicating with the Al assistant server 4000 and generating a response to the prompt 3100 using an LLM. At this time, the response generation unit 3040 can use, as additional information, information acquired by the external data acquisition control unit 3020, the history of conversations conducted on the AI assistant 3000, and other information that can be acquired from the application 2000. For example, the other information acquired from the application 2000 corresponds to posts from a person and another person in a communication tool, information regarding and the update history of a file creator in presentation software, or the like.

### <Software Configuration of Plugin 5000>

As illustrated in Fig. 3C, the plugin 5000 at least includes a plugin manifest 5010 as an information provision method for providing parameters for executing processing. The plugin manifest 5010 is a file describing information regarding the plugin 5000, is registered in the plugin index 2100, and is used as information for the AI assistant 3000 to determine a plugin 5000 that is to be executed.

Fig. 3D illustrates an example of the plugin manifest 5010. The plugin manifest 5010 illustrated in Fig. 3D is file contents in the JavaScript Object Notation (JSON) format and includes information 5011 to 5017.

The information 5011 describes a setting indicating the name of the plugin 5000. The information 5012 describes a description (a description in the natural-language format) of the plugin 5000. The information 5012 is mainly referred to when the Al assistant 3000 determines a plugin 5000 to be executed.

Specifically, in a case where the prompt 3100 is entered, a keyword search or a concept search may be performed between the prompt 3100 and a description, to determine whether the plugin 5000 can be executed. For example, in a case where the prompt 3100 indicates "Economically print / 5 copies of Sample1.pdf", a search is performed between the prompt 3100 and a description "plugin that provides function of receiving file name and print settings as inputs, setting print settings, and printing specified file".

The information 5013 is a component of the plugin 5000 and includes commands in the plugin 5000 indicated by the information 5014. The information 5014 is commands provided in the plugin 5000 and includes an ID, a description, and parameters of each command in the example of Fig. 3D. The information 5015 is the definitions of the parameters of each command and includes a parameter name, a description, and an input format inFig. 3D.

Each of the information 5016 and the information 5017 is descriptions of the commands and the parameters and are mainly referred to when the Al assistant 3000 determines parameters for creating a request to the plugin server 6000. A plurality of commands can also be set in a single plugin 5000, but the maximum number of commands that can be set in a single plugin 5000 conforms to the specifications of the application 2000.

The above-described content is merely an example. The content of the plugin manifest 5010 is not limited to this. For example, the plugin manifest 5010 may describe developer information, a sample prompt, the application programming interface (API) definition of the plugin 5000, an authentication method, and the like. The software configuration of the plugin 5000 is not particularly limited, and for example, may include an icon image and an API definition file for operating the plugin server 6000. API is the abbreviation of application programming interface.

### <Software Configuration of Plugin Server 6000>

As illustrated in Fig. 3E, the plugin server 6000 includes a card creation process control unit 6010, a generative AI model unit 6020, a card template 6030, and a content management unit 6040.

The card creation process control unit 6010 has the function of controlling processing performed by the plugin server 6000 when the card creation process control unit 6010 is called from the Al assistant 3000 using the plugin 5000. The details of processing performed by the AI assistant server 4000 will be described below based on an example. For example, the process of creating the card 3200 is performed based on the card template 6030 using an operation on an external system other than the plugin server 6000, an operation on the generative Al model unit 6020, and the results of the operations on the external system and the generative Al model unit 6020. Further, the process of transmitting the created card 3200 to the application 2000 or the AI assistant 3000 or the like is performed.

The generative AI model unit 6020 is a control unit of a machine learning model trained using a large-scale data set. For example, the "machine learning model" refers to a generative Al model such as an LLM suitable for natural-language processing, a generative adversarial network (GAN) suitable for image processing, or the like.

The plugin server 6000 may include another generative Al model. The generative Al model unit 6020 may not only exist in the plugin server 6000, but may also be included in the external system server 7000 existing outside the plugin server 6000 so that the generative Al model unit 6020 can be used by the plugin server 6000.

The card template 6030 is the model of the card 3200 to be transmitted to the Al assistant 3000. It is possible to apply parameters generated by the processing of the card creation process control unit 6010 to the card template 6030 and create the card 3200 to be posted to the Al assistant 3000. Further, the card template 6030 can not only merely display the output result of the plugin server 6000, but can also receive an operation of the user on the application 2000 or the AI assistant 3000.

For example, the user operates the plugin server 6000 through the card 3200 displayed on the Al assistant 3000, and a CPU 441 can update the card 3200 based on the result of the operation. The card template 6030 may be a single file, or may be a plurality of files. The card template 6030 may be differently used according to the prompt 3100.

Instead of existing in the plugin server 6000, the card template 6030 may also exist as a part of the plugin 5000 provided in the application 2000. The second case requires a process in which instead of the plugin server 6000, the application 2000 or the Al assistant 3000 itself applies parameters received from the plugin server 6000 to the card template 6030 and creates the card 3200.

The content management unit 6040 has the function of managing a file content in the plugin server 6000. The file content managed by the content management unit 6040 is not particularly limited. For example, the content management unit 6040 manages an attached file 3130 attached to the entered prompt 3100, a file acquired from the external system server 7000 by the card creation process control unit 6010 using plugin information, a file generated by the generative AI model unit 6020, and the like.

### <Examples of Card Post UI>

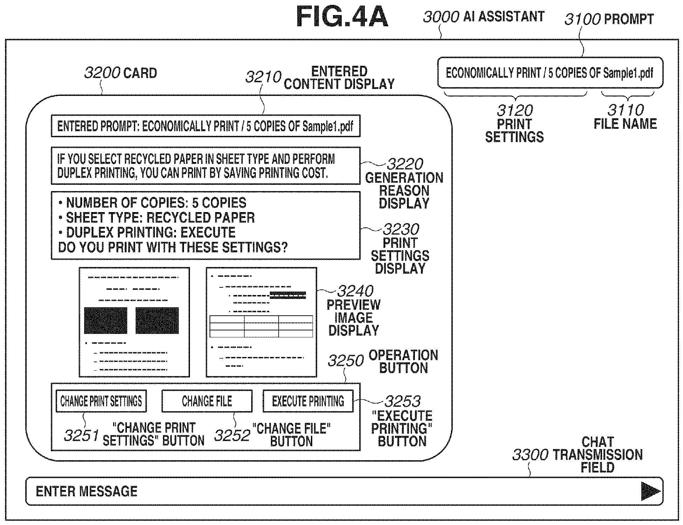

With reference to Figs. 4A to 4D, examples of a card post user interface (UI) according to the present embodiment are described. A screen of the Al assistant 3000 illustrated in each of Figs. 4A to 4D displays the prompt 3100, the card 3200, and a chat transmission field 3300. The prompt 3100 is posted to the AI assistant 3000 by the user. The card 3200 is returned from the plugin server 6000 to the Al assistant 3000.

The chat transmission field 3300 is an example of an entry field and is used by the user to post the prompt 3100 to the Al assistant 3000. The user enters natural-language text to set settings to be used when a file is printed into the chat transmission field 3300, and the Al assistant 3000 receives the natural-language text.

Further, the user can post a file in the chat transmission field 3300, and the Al assistant 3000 acquires the file. When the user specifies the file, the user may post only the file, or may post the file by attaching the file to text, or may post a character string indicating the location of the file, such as a Uniform Resource Locator (URL) or the like.

The following description is given using as an example the plugin 5000 that provides the function of printing a file content specified by the user after the user sets print settings through the Al assistant 3000. However, the display of the card 3200 for performing this processing or the like is not particularly limited.

The plugin 5000 requests at least two parameters, namely a file name 3110 and print settings 3120, as inputs to the plugin server 6000. The file name 3110 is the file name of a file content that is to be printed. The print settings 3120 are specific print settings such as the number of copies, the sheet type, and the presence or absence of duplex printing (or an abstract print setting such as economical printing).

The plugin server 6000 with which the plugin 5000 can communicate has the function of acquiring a file content as a printing target from the external system server 7000 such as cloud storage. The plugin server 6000 also has the function of generating the print settings 3120, the function of creating a preview image in which the generated print settings 3120 are adapted to the acquired file content, and the function of returning the card 3200 describing the generated print settings 3120 and the created preview image.

Based on the prompt 3100 including the file name 3110 and the print settings 3120, the plugin 5000 creates the card 3200 including the print settings 3120 and a preview image and posts the card 3200 to the Al assistant 3000. Then, the user can perform an exchange, such as changing the print settings 3120, changing the printing target, or issuing an instruction to execute printing, using information saved in the card 3200 through the card 3200.

At this time, the execution result of each exchange or each process is displayed not by posting a new card 3200 but by updating the already posted card 3200. Thus, it is possible to prevent the number of posted chat messages from unnecessarily increasing by performing a plurality of exchanges. This produces the effect of improving the operability and the visibility of the application 2000 for the user.

To print another printing target with other settings, the user enters the prompt 3100 anew into the chat transmission field 3300 and calls the plugin 5000, whereby another card 3200 is newly posted. The user can perform a new exchange through the newly posted card 3200. Hereinafter, the plugin 5000 is occasionally referred to as a "print plugin", the plugin server 6000 is occasionally referred to as a "print plugin server", and the external system server 7000 is occasionally referred to as "cloud storage".

In the present embodiment, the card 3200 includes an entered content display 3210, a generation reason display 3220, a print settings display 3230, a preview image display 3240, and operation buttons 3250. The operation buttons 3250 include a "change print settings" button 3251, a "change file" button 3252, and an "execute printing" button 3253.

The card 3200 is an object displayed according to the acquisition of a file and the reception of settings based on natural-language text entered into the chat transmission field 3300. As is clear from Figs. 4A to 4D, the card 3200 does not include the chat transmission field 3300, and the card 3200 and the chat transmission field 3300 are independently displayed in different areas.

The prompt 3100 posted to the AI assistant 3000 by the user is described.

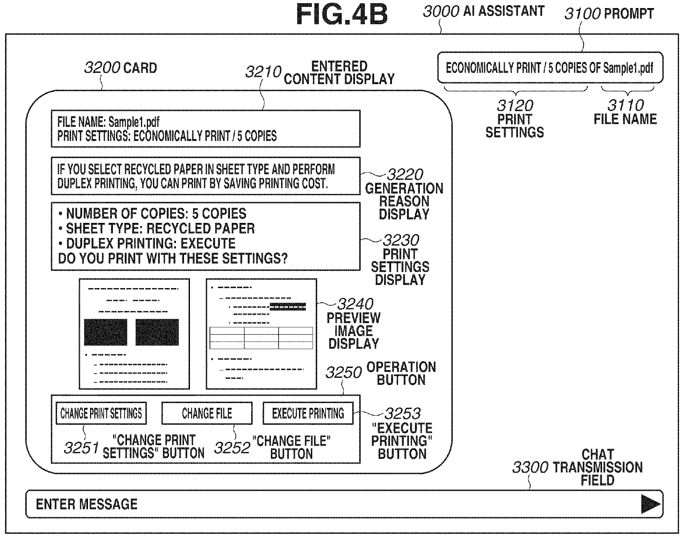

In Fig. 4A, an instruction in the natural-language format indicating "Economically print / 5 copies of Sample1.pdf" is entered as the prompt 3100 by the user (a similar prompt 3100 is also entered in Fig. 4B).

The Al assistant 3000 analyzes the prompt 3100 entered (posted) by the user. In a case where the AI assistant 3000 determines that it is appropriate to execute the print plugin, the Al assistant 3000 calls the print plugin server. At this time, based on the specifying of the parameters described in the plugin manifest 5010, the AI assistant 3000 extracts information regarding the file name 3110 indicating "Sample1.pdf" and the print settings 3120 indicating "economically print / 5 copies" from the prompt 3100.

These two pieces of information are passed from the Al assistant 3000 to the print plugin server and used in the processing of the card creation process control unit 6010.

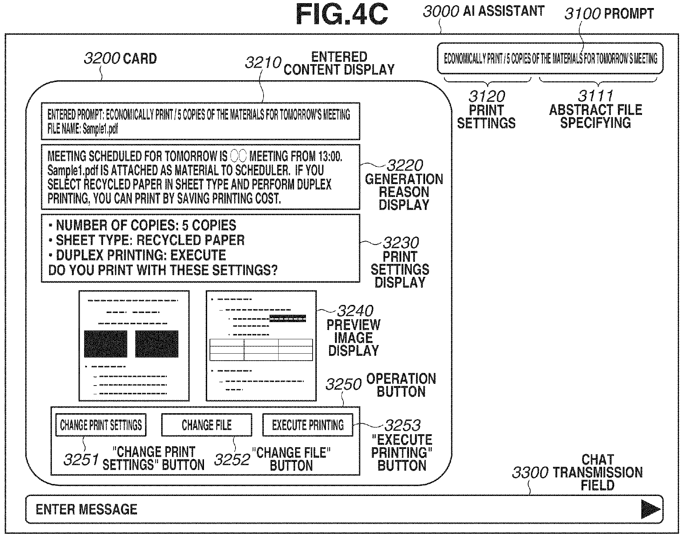

The prompt 3100 entered by the user is not limited to the above-described example. For example, as illustrated in Fig. 4C, the user may indicate a printing target by abstract file specifying 3111, such as "Economically print / 5 copies of the materials for tomorrow's meeting", and call the print plugin. In this case, the work data acquisition control unit 3022 of the Al assistant 3000 searches for materials corresponding to "the materials for tomorrow's meeting" and passes the found materials when the print plugin server is called. Alternatively, a process in which the card creation process control unit 6010 of the print plugin server searches the cloud storage for materials corresponding to "the materials for tomorrow's meeting" or the like is required.

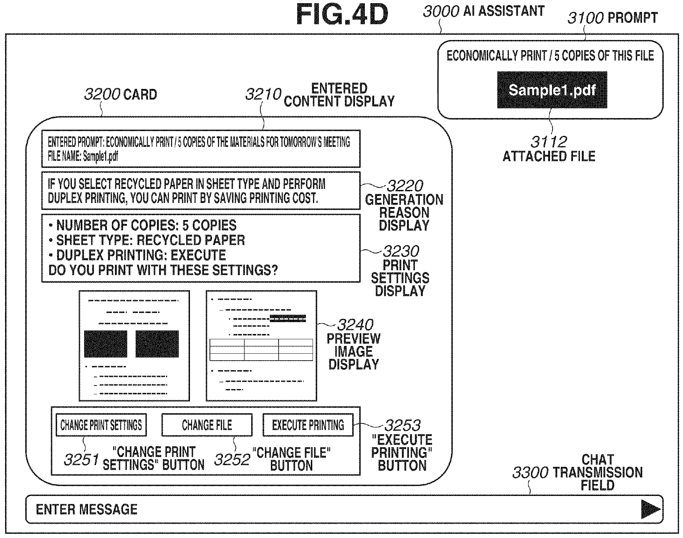

Alternatively, as illustrated in Fig. 4D, the user may attach a file to the prompt 3100 and enter the combination of natural-language text and a file content, such as "Economically print / 5 copies of this file". Further, in a case where the application 2000 having the Al assistant 3000 provides a file editing function, such as document editing software, presentation software, or the like, the following process may be executed. The Al assistant 3000 may receive an instruction indicating "Economically print / 5 copies of this file itself", pass information for distinguishing "this file itself" held in the application 2000 to the print plugin server, and cause the print plugin server to process the information.

The "information for distinguishing" refers to the file name 3110, a file ID, or the like.

Next, the card 3200 returned from (posted by) the print plugin server is described. In the examples of Figs. 4A to 4D, the card 3200 displays the entered content display 3210, the generation reason display 3220, the print settings display 3230, the preview image display 3240, and the operation buttons 3250.

The entered content display 3210 displays the prompt 3100 posted by the user entering the prompt 3100 into the chat transmission field 3300. That is, when the print plugin is called, a content transmitted from the AI assistant 3000 to the print plugin server is displayed, and therefore, the user can check the displayed content.

In the example of Fig. 4A, the prompt 3100 posted by the user is displayed as it is, such as "entered prompt: economically print / 5 copies of Sample1.pdf', in the entered content display 3210. However, the content displayed in the entered content display 3210 is not limited to the above-described content.

For example, as illustrated in Fig. 4B, instead of the actually entered prompt 3100, parameters extracted from the prompt 3100 and transmitted to the print plugin server, such as "file name: Sample1.pdf" and "print settings: economically print / 5 copies", may be displayed. As illustrated in Fig. 4C, the file name 3110 searched for and estimated based on the abstract file specifying 3111, such as "entered prompt: economically print / 5 copies of the materials for tomorrow's meeting" and "file name: Sample1.pdf", may be displayed. It is not essential to display the entered content display 3210, and a configuration may be employed in which the entered content display 3210 is not displayed.

The generation reason display 3220 and the print settings display 3230 display parameters generated by the print plugin server using the generative Al model unit 6020.

In the example of Fig. 4A, the generation reason display 3220 displays "If you select recycled paper in sheet type and perform duplex printing, you can print by saving printing cost." The print settings display 3230 displays "• number of copies: 5 copies", "• sheet type: recycled paper", "• duplex printing: execute", and "Do you print with these settings?"

The contents displayed in the generation reason display 3220 and the print settings display 3230 are not limited to the above-described contents, either. For example, as illustrated in the example of Fig. 4C, the basis for the estimation from the abstract file specifying 3111 in addition to the reason for generating the print settings 3120 may be displayed, such as "Meeting scheduled for tomorrow is ∘∘ meeting from 13:00. Sample1.pdf is attached as material to scheduler."

As illustrated in the example of Fig. 4A, the preview image display 3240 displays an image (a preview image) in which the print settings 3120 generated by the generative AI model unit 6020 are adapted to the file as the printing target specified by the file name 3110 or the like. Consequently, the user can check whether the contents of the print settings 3120 and the like indicated by the prompt 3100 are reflected as intended by the user.

As described above, the card 3200 can not only display a product generated by the plugin server 6000 using the generative Al model unit 6020, but also display the result of further performing another process using the product.

The operation buttons 3250 display buttons for the user having checked the product to perform additional operations. In the example of Fig. 4A, the operation buttons 3250 include the "change print settings" button 3251, the "change file" button 3252, and the "execute printing" button 3253.

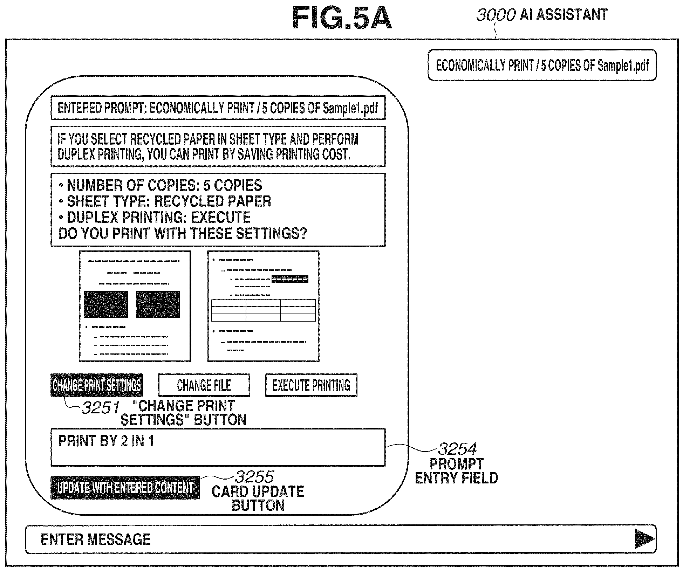

The "change print settings" button 3251 provides the function of being pressed, whereby the CPU 141 receives the additional entry of the prompt 3100 by the user and regenerates the print settings 3120 (described below with reference to Fig. 5A). The "change file" button 3252 provides the function of being pressed, whereby the CPU 141 receives the reselection of a file by the user and changes the printing target. The "execute printing" button 3253 provides the function of being pressed, whereby the CPU 141 submits a print job to a printer with the contents displayed on the card 3200.

As the operation buttons 3250, a single button may be displayed on a single card 3200, or a plurality of buttons may be displayed on a single card 3200. The upper limit of the number of buttons that can be displayed conforms to the specifications of the application 2000.

Examples of a screen when the card 3200 is posted have been illustrated above with reference to Figs. 4A to 4D. As described above, even in a case where the same file is printed with the same settings, the elements displayed on the card 3200 or the display method may differ depending on the manner of writing the prompt 3100. The examples of Figs. 4A to 4D have in common that the same file, namely "Sample1.pdf", is printed with the same settings, namely "• number of copies: 5 copies", "• sheet type: recycled paper", and "• duplex printing: execute". On the other hand, a configuration may be employed in which display is always performed in one of the above-described patterns.

Although the description has been given with reference to Figs. 4A to 4D based on the premise that the card 3200 associated with a single print job is posted by a single prompt 3100, the number of cards 3200 that can be posted at a time by the plugin server 6000 is not particularly limited.

For example, a configuration may be employed in which in response to the prompt 3100 indicating "Propose the optimal print settings 3120 for Sample1.pdf / Sample2.pptx", an individual card 3200 is posted for each file. In this case, the user can set print settings for the file corresponding to each card 3200.

### <Examples of Card Update UI>

With reference to Figs. 5A to 5F, a description is given of examples of a screen (a UI) when the card 3200 according to the present embodiment is updated. For illustrative purposes, Figs. 5A to 5F are based on the premise that the prompt 3100 and the card 3200 illustrated in Fig. 4A are posted. In the following description, the selection of the operation buttons 3250 involved in an update of the card 3200 refers to a general user operation for executing any operation, such as the click of a mouse for selecting a button, the pressing of an enter key of a keyboard, or the like.

### <Example of Card Update UI When Print Settings Are Changed>

In a case where the user wishes to change the print settings 3120 generated by the print plugin server, the user can select the "change print settings" button 3251 on the card 3200 and generate different print settings.

Fig. 5A illustrates an example of the card 3200 displaying a prompt entry field 3254 and a card update button 3255 by selecting the "change print settings" button 3251. The prompt entry field 3254 and the card update button 3255 are elements that are not displayed when the card 3200 is initially posted (Fig. 4A), and are displayed by selecting the "change print settings" button 3251.

The prompt entry field 3254 is a field into which the user can enter the prompt 3100 in the natural-language format. The user can enter the prompt 3100 into the prompt entry field 3254 by using the operation unit 120, a software key (not illustrated) displayed by selecting the software key, or the like. The Al assistant 3000 receives natural-language text entered into the prompt entry field 3254 by the user and uses the received natural-language text to set settings when a file is printed.

For example, the example of Fig. 5A illustrates the state where the user enters the prompt 3100 indicating "Print by 2 in 1". The content of the prompt 3100 that can be entered into the prompt entry field 3254 is not particularly limited, but the number of characters that can be entered and whether a file can be attached conforms to the restrictions of the plugin 5000 and the application 2000.

When the entry of the prompt 3100 into the prompt entry field 3254 is completed, the user selects the card update button 3255. In response to the card update button 3255 being selected, a request including the current print settings 3120 and the file name 3110 held in the card 3200 and the prompt 3100 entered into the prompt entry field 3254 is transmitted to the print plugin server. Consequently, the print settings 3120 are generated again using the generative Al model unit 6020, and the card 3200 is updated based on the result of the generation.

That is, at this time, a new card 3200 is not posted, but the display contents of the already posted card 3200 are updated according to the prompt 3100 of the user. A configuration may be employed in which the print settings 3120 corresponding to the prompt 3100 entered by the user and the like are displayed on a new card 3200.

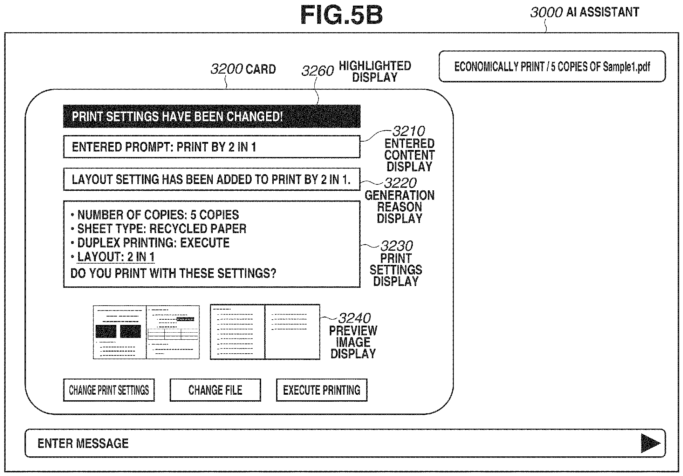

Fig. 5B illustrates an example of the card 3200 updated by selecting the card update button 3255 in Fig. 5A. In Fig. 5B, the entered content display 3210, the generation reason display 3220, the print settings display 3230, and the preview image display 3240 are updated based on the prompt 3100 indicating "Print by 2 in 1" entered in Fig. 5A. Further, as a new element of the card 3200, a highlighted display 3260 indicating the content of the executed operation, such as "Print settings have been changed!", is added.

At this time, the preview image is updated, whereby the preview image in which the settings based on the prompt 3100 entered first by the user are applied is not displayed. A configuration may be employed in which the preview image before the update continues to be displayed to clarify the states before and after the update.

As a matter of course, in a case where the user enters "Print by 4 in 1" into the prompt entry field 3254, the entered content display 3210, the generation reason display 3220, the print settings display 3230, and the preview image display 3240 are updated based on the entered prompt 3100. For example, in a case where the user specifies not only print settings but also the number of copies to be printed, the item corresponding to the specified number of copies to be printed is updated.

For example, in a case where the user enters "Print 6 copies" into the prompt entry field 3254, for example, the highlighted display 3260 displays "Number of copies has been changed!" For example, the entered content display 3210 displays "entered prompt: print 6 copies". For example, the generation reason display 3220 displays "Setting value of number of copies has been changed because number of copies to be printed was specified" or the like. Further, regarding the print settings display 3230, the content "number of copies: 5 copies" displayed before the user selects the card update button 3255 as illustrated in Fig. 5A is updated to "number of copies: 6 copies" (not illustrated).

A configuration may be employed in which at this time, the character string "5 copies" is not displayed, and the character string "6 copies" is displayed. That is, a configuration may be employed in which, in a case where a print setting is changed by the user as described above, the print setting before the change is not displayed, and the print setting after the change is displayed. Both print settings before and after the change may be displayed. The display of the print setting may refer to all the plurality of setting items, or may refer to the changed setting item.

### <Example of Card Update UI When File Is Changed>

In a case where the user wishes to change the printing target, such as a case where the user erroneously enters the file name 3110 or the like, the user selects the "change file" button 3252 on the card 3200. Consequently, the user can adapt the currently displayed print settings 3120 to another file to be selected next. The user can apply the print settings 3120 as they are while changing the printing target. Thus, the user does not need to set again the same print settings 3120 from the start when the printing target is changed. This reduces trouble.

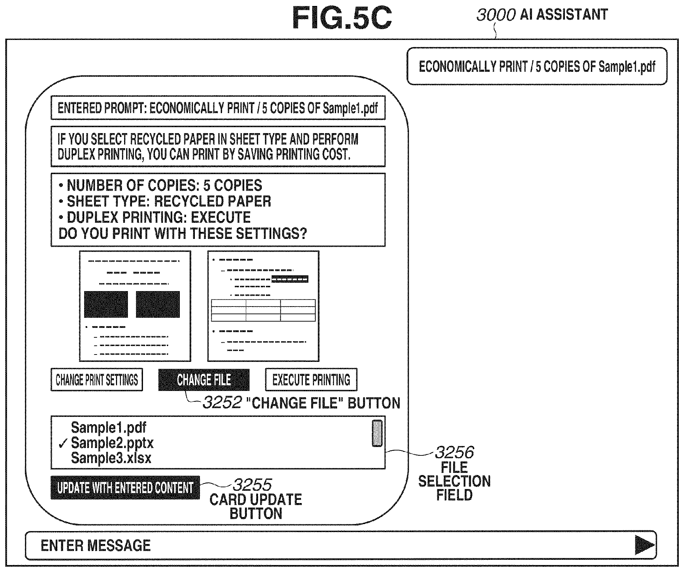

Fig. 5C illustrates an example of the card 3200 displaying a file selection field 3256 in a scrolling format and the card update button 3255 by selecting the "change file" button 3252. The process of acquiring files displayed in the file selection field 3256 is not particularly limited. For example, information acquired by the print plugin server accessing an external service may be displayed, or the files may be displayed by a function of the card 3200 cooperating with a work data acquisition function of the application 2000 (or the Al assistant 3000).

For example, the files displayed as candidates in the file selection field 3256 are files recently used by the user, files present in the same directory as the first selected file, files of the same extension, frequently used files, files having printing history, or the like.

Instead of the file selection field 3256, the prompt entry field 3254 similar to that in Fig. 5A may be displayed, or both the file selection field 3256 in the scrolling format and the prompt entry field 3254 may be displayed.

Further, the "change file" button 3252 may not necessarily need to be selected for the user to change the printing target. For example, as described above, the printing target may be changed and the display of the card 3200 may be updated by the user entering "Change to Sample2.pptx" into the prompt entry field 3254 displayed by selecting the "change print settings" button 3251.

### <Example of Card Update UI When Printing Is Executed>

In a case where the user checks the print settings display 3230, the preview image display 3240, and the like displayed on the card 3200, is satisfied with the various settings, and wishes to execute printing, the user selects the "execute printing" button 3253. The user selects the "execute printing" button 3253 to that the user can submit a print job to a printer through the processing of the print plugin server. As a result, the file (the printing target) specified by the user is printed with the settings specified by the user.

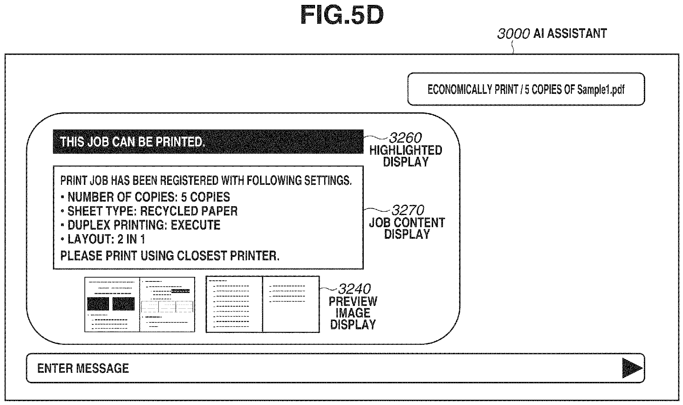

Fig. 5D illustrates the card 3200 indicating that a print job is submitted to a printer or a server by selecting the "execute printing" button 3253. Fig. 5D illustrates a job content display 3270 that displays the print settings of a print job ultimately submitted to a printer or the like in addition to the highlighted display 3260 and the preview image display 3240. The print settings of the ultimately submitted print job refer to setting values set when the user selects the "execute printing" button 3253.

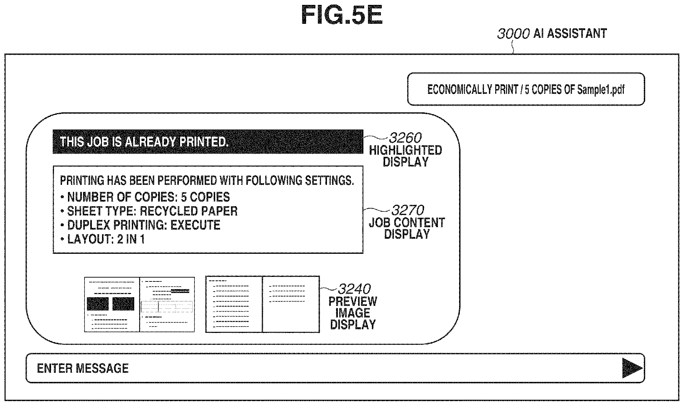

Further, the card 3200 is also updated by the processing of the plugin server 6000 without the user operating the card 3200. Fig. 5E illustrates the state where the card 3200 is updated using as a trigger the printing of the job submitted as described above by the printer. In the state of Fig. 5E, the highlighted display 3260 and the job content display 3270 are updated from the state of Fig. 5D. In the present embodiment, in a case where the user is satisfied with the settings based on the prompt 3100 entered first by the user, the update process is not performed, and printing can also be performed with these settings.

Each of the examples of display in Figs. 5D and 5E illustrates the card 3200 displayed when the subject of the processing is switched to the print plugin server and the printer at the connection destination after the print job is submitted, and therefore, the operation buttons 3250 are not displayed. The present disclosure is not limited to this. For example, the function of displaying an operation button 3250 indicating "print another file with same settings" and posting a new card 3200 or urging the user to enter the prompt 3100 may be provided. Alternatively, a configuration may be employed in which an operation button 3250 indicating "print once again" or "cancel print job" is displayed, and the button is selected, whereby processing corresponding to the selected button is executed.

### <Example of Card Update UI When Error Occurs>

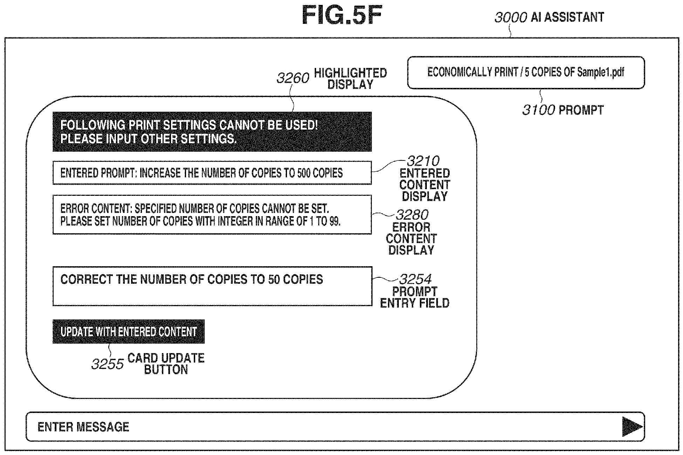

In a case where the print settings 3120 specified by the prompt 3100 are inappropriate, the CPU 141 displays the card 3200 indicating that the prompt 3100 is inappropriate. Fig. 5F illustrates an example of the card 3200 displayed when an inappropriate prompt 3100 indicating "Increase the number of copies to 500 copies" is entered into the prompt entry field 3254 in Fig. 5A.

The card 3200 illustrated in Fig. 5F displays the highlighted display 3260, the entered content display 3210, an error content display 3280, the prompt entry field 3254, and the card update button 3255. For example, the error content display 3280 displays the description of the cause of the error and the handling of the error, such as "Error content: Specified number of copies cannot be set. Please specify number of copies with integer in range of 1 to 99."

As the feature of Fig. 5F, the preview image display 3240 does not exist on the card 3200 as illustrated in Figs. 5A to 5E. For example, in a case where an instruction indicating "64 in 1" is issued by the prompt 3100 in the state where up to 16 in 1 can be set (is handled), this setting cannot be made, and therefore, a preview image is not generated (cannot be generated). Thus, the preview image display 3240 is not displayed on the card 3200. For example, a configuration may be employed in which an image representing an error is displayed in the preview image display 3240.

In the case of an error regarding the specifying of the number of copies as described in the present embodiment, the print settings themselves do not have an error, and therefore, a preview image can be generated and displayed in the preview image display 3240. Thus, such a configuration may be employed. However, in a case where the prompt 3100 is inappropriate (has an error), the presence of a difference in display from a case where the prompt 3100 does not have an error also provides the effect of facilitating error recognition by the user.

Accordingly, in the following description, the card 3200 in which the preview image display 3240 exists is occasionally referred to as a "preview card", and the card 3200 in which the preview image display 3240 does not exist is occasionally referred to as an "error card".

The preview card and the error card may be created from different card templates 6030, or may be created from the same card template 6030. Among preview cards and error cards, each card may be generated by differently using a plurality of card templates 6030 according to the use or the error.

The condition for creating an error card is not particularly limited. Examples of the condition include the condition that processing is not properly performed or processing is not appropriately performed, and the like, such as the condition that a specified file content is not present, the condition that the prompt 3100 unrelated to printing is entered, and the like.

With reference to Figs. 4A to 4D and 5A to 5F, descriptions have been given above of examples of the UI screens when the card 3200 is created and when the card 3200 is updated.

The card Uls, however, are not limited to these, and may employ various forms according to the specifications of the application 2000 or the plugin 5000.

For example, in a case where the user enters the prompt 3100 indicating "Print @Sample1.pptx" without specifying print settings, frequently used print buttons, setting values, and the like such as "economical printing", "materials for meeting", and "poster printing" may be displayed. As described above, the display of the card 3200 may be changed according to the entry of the user or a response from the generative Al.

Further, in a case where the computer 1000 is a mobile terminal, the display unit 110 can be small. Thus, the display of the card 3200 may be changed by the terminal executing the application 2000 by, for example, adjusting the size of the preview image display 3240.

### <Examples of Sequences>

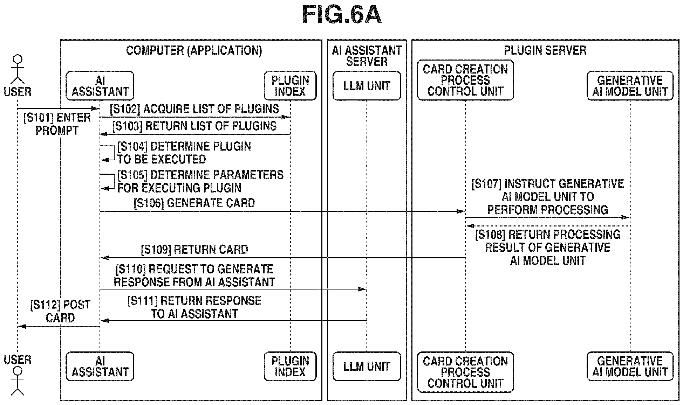

With reference to Figs. 6A to 6C, a description is given of the flow of processing until the CPU 141 of the computer 1000 posts the card 3200 according to the present embodiment. "S" in the following description represents a step in the processing, and the number following "S" represents the number of the step. The application 2000 operates under control of the CPU 141 of the computer 1000.

### <Plugin Calling Sequence When Card Is Created>

With reference to Fig. 6A, a description is given of a sequence until the CPU 141 controls the components to call the plugin 5000 and post the card 3200. The application 2000 and the Al assistant 3000 execute the functions by the CPU 141. The CPUs of the computer 1000, the AI assistant server 4000, and the plugin server 6000 control the apparatuses to enable the apparatuses to communicate with each other using the network communication units of the apparatuses.

In step S101, the CPU 141 controlling the application 2000 receives the entry of the prompt 3100 by the user.

In step S102, the AI assistant 3000 controlled by the CPU 141 requests a list of plugins 5000 registered in the application 2000 from the plugin index 2100.

In step S103, the plugin index 2100 controlled by the CPU 141 returns the list of plugins 5000 requested by the Al assistant 3000, whereby the AI assistant 3000 receives (acquires) the list of plugins 5000. In a case where the plugin index 2100 is a database, a configuration may be employed in which the Al assistant 3000 refers to the plugin index 2100 and acquires the list of plugins 5000.

In step S104, the Al assistant 3000 controlled by the CPU 141 determines a plugin 5000 to be executed in response to an instruction from the user entered as the prompt 3100. For example, the AI assistant 3000 performs the determination by referring to a description of each plugin 5000 (a description in the natural-language format regarding each plugin 5000) based on the prompt 3100 entered by the user and performing a keyword search or a concept search using AI.

This process is described taking another specific example. First, the Al assistant 3000 controlled by the CPU 141 performs a concept search between the prompt 3100 entered by the user in step S101 and the description of the print plugin as illustrated in the information 5012 in Fig. 3D. In a case where a plurality of candidates is present, the AI assistant 3000 searches for and evaluates each plugin 5000. As a result, under the condition that a certain rank or score is satisfied, the Al assistant 3000 can determine that it is appropriate to execute the print plugin.

In a case where a plurality of appropriate plugins 5000 is present, the Al assistant 3000 may perform processing on each plugin 5000, or may perform processing on a plugin 5000 selected from among the plurality of appropriate plugins 5000. If, on the other hand, an appropriate plugin 5000 is not present, the AI assistant 3000 may not perform processing on the plugins 5000.

Further, a single plugin 5000 may have a plurality of commands. The Al assistant 3000 may refer to a description set for each command and determine the plugin 5000 on a per-command basis. When the Al assistant 3000 controlled by the CPU 141 determines a plugin 5000 on which the Al assistant 3000 is to execute processing and commands of the plugin 5000, the processing proceeds to step S105.

In step S105, the Al assistant 3000 controlled by the CPU 141 determines parameters for executing the plugin 5000. For example, the AI assistant 3000 determines parameters based on the prompt 3100, an operation log, and other information that can be acquired by the Al assistant 3000. Further, at this time, the Al assistant 3000 refers to a description of each parameter and extracts parameters or generates parameters using the generative AI. For example, the operation log is a log managed by the Al assistant 3000.

For example, in this determination of parameters, the Al assistant 3000 extracts parameters from the prompt 3100 using the generative AI based on the prompt 3100 and descriptions of parameters "fileName" and "printConfig" as illustrated in the information 5015.

Consequently, the Al assistant 3000 determines that a value "Sample1.pdf" is appropriate for the parameter "fileName", and a value "economically print / 5 copies" is appropriate for the parameter "printConfig". In this case, specifically, descriptions "file name of file content that is to be printed" and "specific print settings such as number of copies, sheet type, and presence or absence of duplex printing (or abstract print setting such as economical setting)" are used for the determination.

Alternatively, in a case where a printing target is indicated by the abstract file specifying 3111, such as "Economically print / 5 copies of the materials for tomorrow's meeting" as illustrated in Fig. 4C, the AI assistant 3000 may refer to a schedule management function of the application 2000 and acquire a corresponding file. Specifically, for example, the Al assistant 3000 acquires the user's schedule for the next day and identifies a file or a folder including the character string of the scheduled meeting by a search, whereby the corresponding file is acquired. In a case where a file is attached to the schedule, the AI assistant 3000 can acquire the attached file.

Alternatively, the Al assistant 3000 acquires the next date (the character string) based on the current date and identifies a file or a folder including the acquired character string by a search, whereby the corresponding file is acquired.

Also in the process of referring to the schedule management function of the application 2000, similarly to the determinations of a plugin and parameters, the application 2000 may refer to the prompt 3100 and determine whether to execute the process, using the generative Al or the like.

In step S106, the AI assistant 3000 transmits a request to generate the card 3200 to the plugin server 6000. The plugin server 6000 having received the request starts a card 3200 generation process in the card creation process control unit 6010 controlled by the CPU 641.

In step S107, the card creation process control unit 6010 controlled by the CPU 641 instructs the generative Al model unit 6020 to generate a product. For example, the print plugin server inputs the parameter "printConfig" specified in step S105 in the information received from the Al assistant 3000 to the generative AI model (the generative Al model unit 6020) and instructs the generative Al model (the generative AI model unit 6020) to generate print settings in the JSON format.

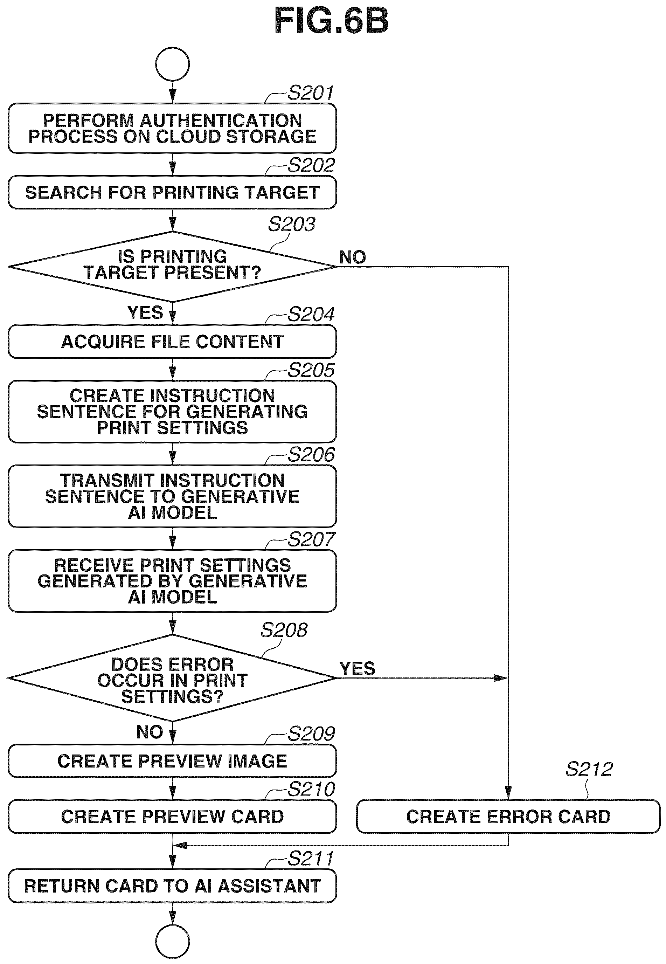

In step S108, the card creation process control unit 6010 receives a product returned from the generative Al model unit 6020, and generates the card 3200 based on the received information. The details of the card generation process will be described with reference to Fig. 6B.

In step S109, the card creation process control unit 6010 controlled by the CPU 641 transmits (returns) the card 3200 after the generation in step S108 is completed to the Al assistant 3000 of the computer 1000.

In step S110, the Al assistant 3000 having received the card 3200 generated by the plugin server 6000 transmits a request to generate a response to the Al assistant server 4000, using the prompt 3100 and the card 3200 as inputs. The CPU 441 of the Al assistant server 4000 having received the request controls an LLM unit (not illustrated) to generate a response corresponding to the received request. This response is a response to be performed later by the Al assistant 3000 in response to the prompt 3100 entered in step S101 by the user.

In step S111, the CPU 441 transmits (returns) the response generated using the LLM unit to the computer 1000.

In step S112, the AI assistant 3000 controlled by the CPU 141 displays the response from the Al assistant 3000 on the display unit 110 of the computer 1000. Consequently, the card 3200 as illustrated in any of Figs. 4A to 4D is displayed, and the user can operate the operation buttons 3250 to operate the plugin server 6000.

The processes of steps S110 and S111 may be omitted. This is because, for example, if the summaries of the card 3200 returned from the plugin server 6000 and the card 3200 generated by the LLM unit are both displayed in response to the prompt 3100 of the user, there is a case where the contents overlap each other. On the other hand, there is also a case where the user wishes to display many elements at a time on the card 3200 returned from the plugin server 6000. In this case, these processes are not omitted, and the summary of the card 3200 generated by the LLM unit is generated and displayed, whereby it is also possible to improve user experience (UX).

This is an example of the basic plugin 5000 calling sequence. The order of the plugin 5000 calling sequence is not limited to this, and the sequence may include another process. Further, some of the processes may not be performed so long as this configuration can exert the effects of the present disclosure.

### <Card Creation Process by Plugin Execution Control Unit>

Next, with reference to Fig. 6B, an example of a card creation process is described using the print plugin described in the section of the card post UI as an example. The processing illustrated in this flowchart is executed by the CPU 641 of the plugin server 6000 controlling the card creation process control unit 6010 and the generative Al model unit 6020.

This processing is the detailed processing of the card generation process described before and after step S108. The start timing of this processing is when the Al assistant 3000 transmits a request to generate the card 3200 to the plugin server 6000 (step S106). At this time, the card creation process control unit 6010 starts a card 3200 generation process.

As described above, the print plugin inputs at least two parameters, namely the file name 3110 and the print settings 3120, to the print plugin server. Each apparatus communicates via the network communication unit included in the apparatus.

In step S201, to acquire a file content of a file that the user wishes to print, the card creation process control unit 6010 controlled by the CPU 641 performs an authentication process on the cloud storage used by the user. For example, authentication information regarding the user is input when the user adds the plugin 5000 to the application 2000, or when the plugin 5000 is initially executed, or the like. Then, the authentication process is executed using this information.

In step S202, the card creation process control unit 6010 controlled by the CPU 641 instructs the cloud storage to search for a printing target. At this time, the CPU 641 can instruct the cloud storage to perform the search by transmitting a signal such as a command or the like to a cloud service or the like that manages the cloud storage. The cloud storage having received the instruction executes the search according to the received instruction. When the search is completed, the cloud storage transmits (returns) the result of the search to the plugin server 6000.

In step S203, the CPU 641 determines whether a printing target is present in the cloud storage. Specifically, for example, in a case where the cloud storage succeeds in the search and identifies a printing target, the CPU 641 receives information indicating this state. In a case where, on the other hand, the cloud storage fails in the search and does not identify a printing target, the CPU 641 receives a signal indicating this state. Consequently, based on the received information, the CPU 641 determines whether a printing target is present. A configuration may be employed in which in a case where a response is not returned from the cloud storage even after a predetermined time elapses, the CPU 641 determines that a printing target is absent.

Based on a signal received by the CPU 641, in a case where it is determined that a printing target is present (YES in step S203), the processing proceeds to step S204. In a case where it is determined that a printing target is not present (NO in step S203), the processing proceeds to step S212.

In step S204, the CPU 641 receives a file as the printing target subsequent to the signal in step S203.

Consequently, the CPU 641 acquires a file content. A configuration may be employed in which in a case where it is determined that a printing target is present in the cloud storage, the CPU 641 receives not a signal indicating this state but a file as the printing target. In this case, in step S203, in response to receipt of a file, the CPU 641 determines that a file as a printing target is present.

In step S212, for example, the card creation process control unit 6010 controlled by the CPU 641 creates an error card (the card 3200) as described with reference to Fig. 5F. The design of the error card at this time is not limited to that in Fig. 5F, and a design or text appropriate for the content of the error is displayed.

In step S205, the card creation process control unit 6010 controlled by the CPU 641 executes an instruction sentence creation process to generate the print settings 3120. This creates an instruction sentence.

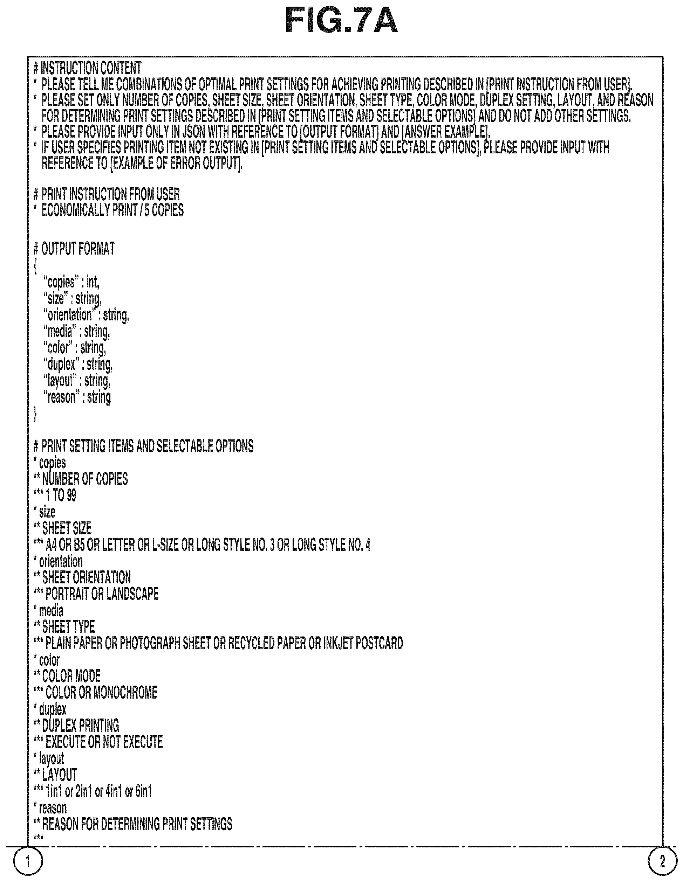

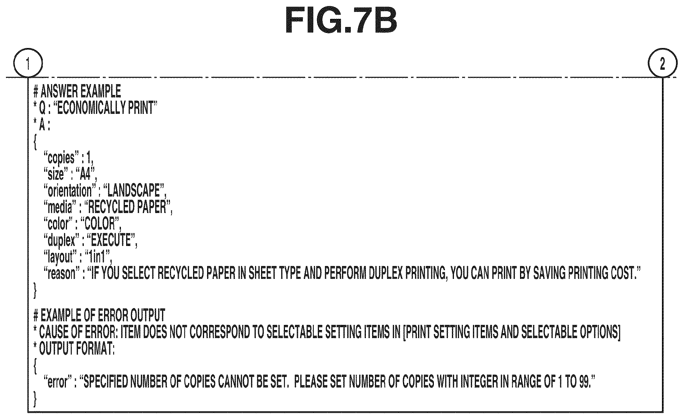

The content of the instruction sentence created in this case is not particularly limited, and as illustrated in Figs. 7A and 7B, may be character strings in the natural-language format including "instruction content", "print instruction from user", "output format", "print setting items and selectable options", "answer example", and "example of error output".

In step S206, the card creation process control unit 6010 controlled by the CPU 641 transmits and inputs the instruction sentence created in step S205 to the generative Al model unit 6020. When the instruction sentence is input to the generative Al model unit 6020 controlled by the CPU 641, the generative AI model unit 6020 generates the print settings 3120 according to the instruction sentence. When the generation of the print settings 3120 is completed, the generative AI model unit 6020 returns the generated print settings 3120 to the card creation process control unit 6010.

In step S207, the card creation process control unit 6010 controlled by the CPU 641 receives the print settings 3120 generated by the generative AI model unit 6020.

In step S208, the card creation process control unit 6010 controlled by the CPU 641 determines whether an error occurs in the print settings 3120. The CPU 641 checks the generated print settings 3120, and in a case where the CPU 641 determines that an error occurs (YES in step S208), the processing proceeds to step S212. In step S212, the card creation process control unit 6010 controlled by the CPU 641 creates an error card.

In the determination process in step S208, for example, the determination is made based on whether a JSON file including only a key value "error" is output as described in "example of error output" in Figs. 7A and 7B. In a case where the CPU 641 determines that an error does not occur in the generated print settings 3120 (NO in step S208), the processing proceeds to step S209.

In step S209, the card creation process control unit 6010 controlled by the CPU 641 generates a preview image based on the file content acquired in step S204 and the print settings 3120 generated in step S207. Specifically, for example, the preview image generated in this case is an image in the state where the generated print settings 3120 are applied to the acquired file content.

For example, in the preview image creation process, the image may be created in a rule-based manner, or may be generated using the generative Al model.

In step S210, the card creation process control unit 6010 controlled by the CPU 641 creates a preview card using the card template 6030.

In steps S210 and S212, the card creation process control unit 6010 may perform preprocessing for adjusting the visual quality of the card 3200. For example, the print settings may not be displayed in a sentence, and the print settings may be displayed using items as illustrated in the print settings display 3230 in Fig. 4A. To perform such display, the CPU 641 may create a character string including an escape character from data in the JSON format.

Alternatively, the CPU 641 may change the size of an image or a character displayed on the generated card 3200 depending on the terminal executing the application 2000 having the Al assistant 3000, i.e., the size of the display unit 110.

This process may be executed by the CPU 641 adjusting parameters, or may be executed by differently using the card template 6030.

In step S211, the card creation process control unit 6010 controlled by the CPU 641 transmits the card 3200 created in step S210 to the computer 1000 and returns the card 3200 to the Al assistant 3000 of the application 2000.

### <Plugin Calling Sequence When Card Is Updated>

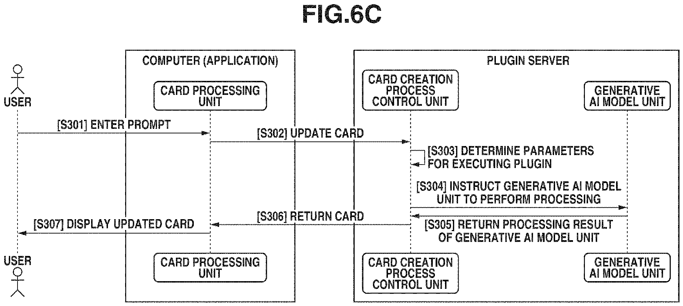

Next, with reference to Fig. 6C, a description is given of a plugin calling sequence when the card 3200 is updated. In the sequence when the card 3200 is updated, unlike the sequence when the card 3200 is created, the plugin server 6000 is called not via the AI assistant 3000.

In step S301, the CPU 141 of the computer 1000 receives the entry of the prompt 3100 by the user through the card 3200. At this time, the user enters an instruction sentence into the prompt entry field 3254 displayed by selecting the "change print settings" button 3251 of the card 3200 and selects the card update button 3255. Alternatively, the user selects a file from the file selection field 3256 displayed by selecting the "change file" button 3252 and selects the card update button 3255.

The present disclosure is not limited to these examples so long as the CPU 141 is in the state where the CPU 141 can receive the prompt 3100 entered by the user in response to the card 3200.

In step S302, the card processing unit 2200 controlled by the CPU 141 in the application 2000 transmits a request to update the card 3200 to the plugin server 6000. At this time, the CPU 641 of the plugin server 6000 receives the request. At this time, the card processing unit 2200 may transmit the request to the plugin server 6000 by adding information other than the entered prompt 3100 to the request.

For example, in the case of the print plugin, the card processing unit 2200 may transmit information regarding the current print settings 3120 or the currently set file content, or information regarding the operation log of operations performed through the Al assistant 3000 or the card 3200 in the past to the plugin server 6000.

Thus, the card 3200 can have these pieces of information as parameters not displayed on the card 3200. Alternatively, these pieces of information may be managed by the plugin server 6000. The card 3200 may have information for identifying the return destination of the card 3200, such as the ID of the card 3200, the ID of chat in the Al assistant 3000, or the like.

In step S303, the card creation process control unit 6010 controlled by the CPU 641 determines parameters for the CPU 141 of the computer 1000 to execute the plugin 5000. This is because the card processing unit 2200 itself of the application 2000 that operates on the computer 1000 does not have the function of extracting parameters from the prompt 3100, and therefore, the card creation process control unit 6010 executes this process. In a case where the card creation process control unit 6010 has this function, the card creation process control unit 6010 may execute the process of extracting parameters. In this case, the transmission in step S302 and the return in step S306 are unnecessary.

In this process, similarly to step S105, the technique for determining parameters is not particularly limited. For example, the CPU 641 may perform the determination based on the prompt 3100, the information transmitted from the card 3200, and other information managed by the plugin server 6000. A configuration may be employed in which at this time, the CPU 641 refers to a description of each parameter also held in the plugin server 6000 (a description in the natural-language format regarding the plugin 5000) and extracts parameters or generates parameters using AI.

The processes of the following steps S304, S305, and S307 are similar to those of steps S107, S108, and S112, respectively, and therefore are not described.

In step S306, the card creation process control unit 6010 controlled by the CPU 641 may refer to the information included in the card 3200 received in step S302 as information for determining the transmission (return) destination. The process of step S306 is similar to that of step S109 except for that. With reference to Figs. 6A to 6C, descriptions have been given above of the sequences of the processing performed between the components included in the computer 1000 having the application 2000, the AI assistant server 4000, and the plugin server 6000 according to the present embodiment. However, the above-described content is merely an example, and the sequences of the processing are not limited to these. Processes may be increased or decreased, or the order of processes may be switched so long as this configuration can obtain the effects of the present disclosure.

### <Card Template>

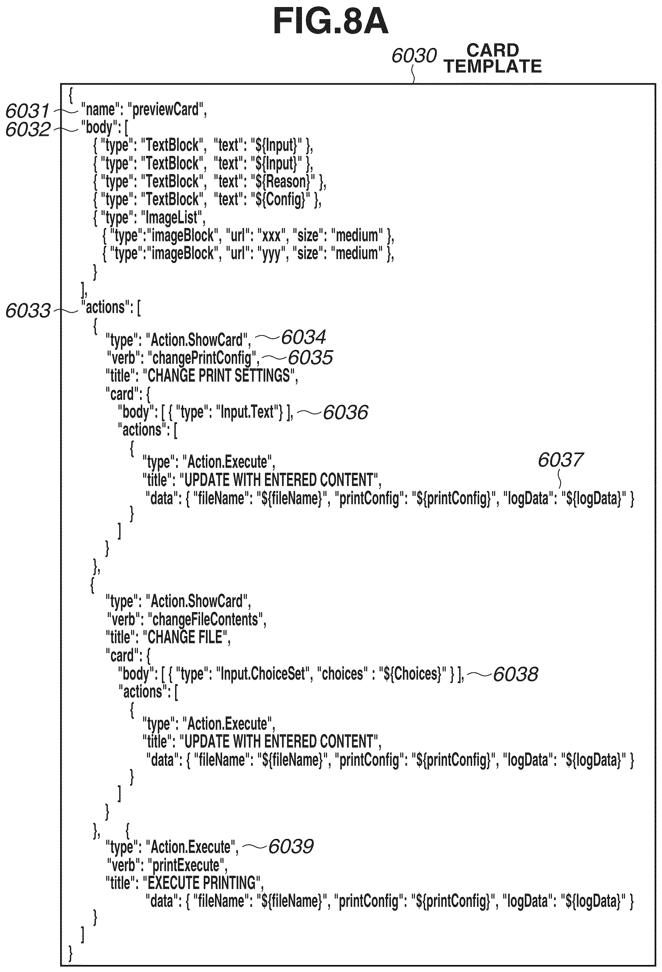

With reference to Fig. 8A, an example of the card template 6030 is illustrated using a preview card in the print plugin as an example. The card template 6030 illustrated in Fig. 8A is a file content in the JSON format and includes information 6031 to 6038.

The card template 6030 can be rewritten by the user.

That is, the user can select the content of information displayed on the card 3200 or rearrange the order of the displayed information. Further, the user can set a condition for displaying an object such as an entry field, a button, or the like.

The information 6031 describes a setting indicating the name of the card 3200. The information 6032 has a data structure where data is bracketed using "body" as a key. The information 6032 describes settings for displaying elements such as text, an image, an entry field, and the like on the card UI, namely the entered content display 3210, the generation reason display 3220, the print settings display 3230, the preview image display 3240, the highlighted display 3260, and the like.

In the example of Fig. 8A, a description bracketed by ${}, such as "${Input}", is present. The card creation process control unit 6010 of the plugin server 6000 replaces the parameter, whereby the card 3200 according to the processing content is created.

The information 6033 has a data structure where data is bracketed using "actions" as a key and describes settings regarding the operation buttons 3250 provided as buttons on the card UI.

The information 6034 describes settings for displaying the prompt entry field 3254 and the card update button 3255 that are elements displayed by pressing the "change print settings" button 3251 as illustrated in Fig. 5A, but not displayed (hidden) in an initial state. In Fig. 8A, the information 6034 describes settings for displaying the hidden elements by describing data structures where data is bracketed by the "body" key and the "actions" key.

The manner of the description conforms to the specifications of the application 2000 or the rule of the described language.

The information 6035 describes settings for the card creation process control unit 6010 controlled by the CPU 641 to distinguish a button selected by the user on the card 3200.

The information 6036 describes settings for displaying the prompt entry field 3254 on the card 3200.

The information 6037 describes the definitions of parameters handed over to the plugin server 6000 when the card update button 3255 is selected, as a parameter handover method. In the example of Fig. 8A, the information 6037 describes settings regarding a parameter regarding the file content, a parameter regarding the print settings, and a parameter regarding the operation log.

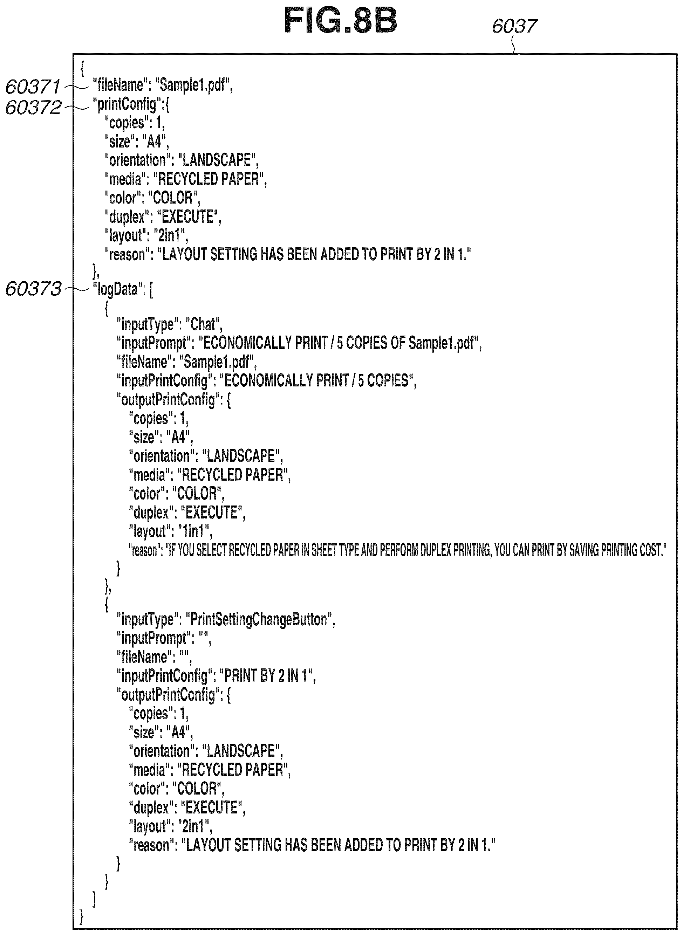

Fig. 8B illustrates an example of a part of the information 6037 regarding the card 3200 in which the parameters are actually filled according to the definitions of the parameters. In Fig. 8B, information 60371 describes the current file name, and information 60372 describes the current print settings. Additionally, information 60373 describes the log of operations performed through the chat transmission field 3300 or the operation buttons 3250 in the past as an array. Such parameters are handed over, whereby it is possible to appropriately change the print settings, change the printing target, or issue an instruction to execute printing.

The parameter handover method is not limited to the example of the information 6037, and may be achieved according to various notations. Alternatively, a database for managing parameters may be held in the plugin server 6000. Then, the information 6038 describes settings for displaying the file selection field 3256. The information 6039 describes settings for displaying the "execute printing" button 3253.

The card template 6030 is defined by these descriptions, and the card template 6030 is used in the above-described processing, whereby the card 3200 is generated and displayed.

The above-described content is merely an example of the card template 6030 in the print plugin, and the content of the card template 6030 is not limited to this, and conforms to the specifications of the application and the plugin.

### [Second Embodiment]

A second embodiment of the present disclosure is described below. In the second embodiment, unlike the first embodiment, the application 2000 directly performs exchanges with an application server 9000 including the generative AI model unit 6020 not via the Al assistant 3000.

The second embodiment as described above has the following two advantages. The first advantage is that the process of determining a plugin 5000 (step S104) performed by the Al assistant 3000 in the first embodiment is not executed, and therefore, a plugin 5000 unintended by the user is not called.

The second advantage is that instead of the process of determining parameters (step S105) performed by the AI assistant 3000 in the first embodiment, the process of determining parameters prepared in the application server 9000 and specialized according to the purpose can be performed. For example, an exclusively fine-tuned Al model can also be used for this process. The process of determining specialized parameters can also be used in the process of determining parameters when the card 3200 is updated according to the first embodiment (step S303).

Based on the above-described two advantages, in the second embodiment, a response matching the intention of the user more is generated. Examples of a card post UI, examples of a card update UI, and a card template are similar to those in the first embodiment, and therefore are not described. The following description is given particularly focusing on portions different from the first embodiment.

### <System Configuration>

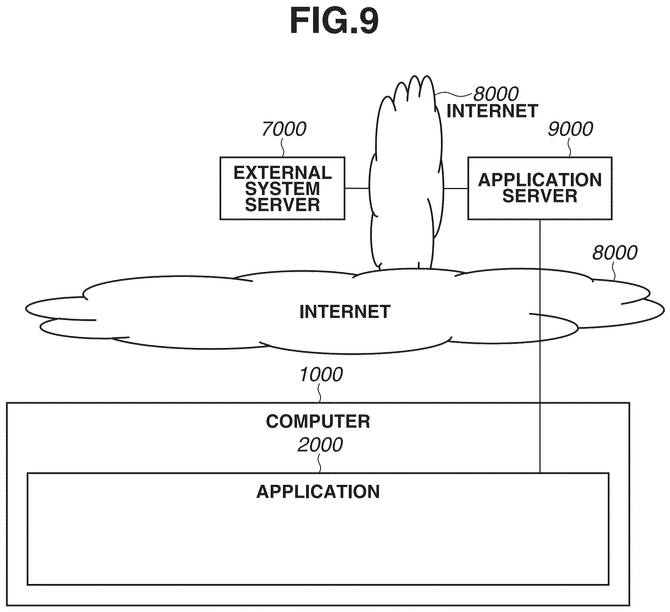

As illustrated in Fig. 9, a network configuration diagram according to the present embodiment includes the computer 1000 that is a terminal apparatus, the external system server 7000, and an application server 9000. Further, the computer 1000 and the application server 9000 are connected together via the Internet 8000, and the application server 9000 and the external system server 7000 are connected together via the Internet 8000.

The hardware configuration of the application server 9000 is similar to the hardware configuration of the plugin server 6000, and therefore is not described. The application 2000 operates on the computer 1000.

### <Software Configuration>

Examples of software configurations according to the second embodiment are described. The software configuration of the application server 9000 is similar to the software configuration of the plugin server 6000 according to the first embodiment, and therefore is not described.

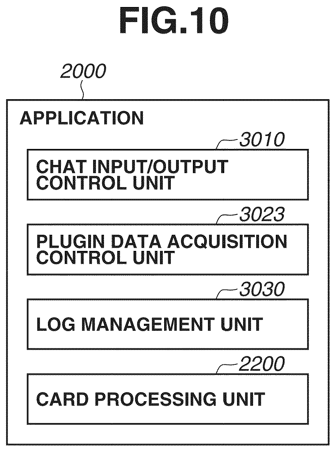

As illustrated in Fig. 10, the application 2000 at least includes the chat input/output control unit 3010, the plugin data acquisition control unit 3023, the log management unit 3030, and the card processing unit 2200. The functions provided by the pieces of software included in the application 2000 are similar to those in the first embodiment, and therefore are not described.

### <Example of Sequence>

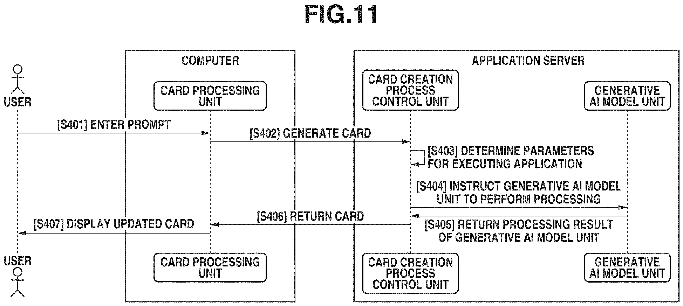

With reference to Fig. 11, a description is given of a plugin 5000 calling sequence when the card 3200 is created according to the second embodiment. The application 2000 is executed by the CPU 141.

In step S401, the CPU 141 controlling the application 2000 receives the entry of the prompt 3100 by the user.

In step S402, the CPU 141 transmits a request to create the card 3200 to the card creation process control unit 6010. At this time, the CPU 141 may add information other than the prompt 3100 and determined in advance by the application 2000. For example, the CPU 141 may also transmit information held in the log management unit 3030 of the application 2000 and regarding the exchange of chat performed in the past on the chat input/output control unit 3010, or the like together with the request.

In step S403, similarly to step S303, the CPU 641 of the application server 9000 performs the process of determining parameters for executing the application 2000. In step S404, the CPU 641 of the application server 9000 instructs the generative Al model unit 6020 to perform processing. In step S405, the CPU 641 of the application server 9000 receives the return of the processing result of the generative AI model unit 6020.

In step S406, the CPU 641 of the application server 9000 transmits (returns) the card 3200 to the application 2000. In step S407, the CPU 141 displays the card 3200 on the display unit 110 of the computer 1000.

As described above, the plugin 5000 calling sequence when the card 3200 is created according to the second embodiment is very similar to the plugin calling sequence when the card 3200 is updated as illustrated in Fig. 6C.

A card creation sequence of the card creation process control unit 6010 and an application calling sequence when the card 3200 is updated according to the second embodiment are similar to the application calling sequence according to the first embodiment, and therefore are not described.

As described above, in the second embodiment, to generate a response matching the intention of the user, the application 2000 directly performs exchanges with the application server 9000 including a generative Al model not via the AI assistant 3000.

### [Third Embodiment]

A third embodiment of the present disclosure is described below. In the third embodiment, unlike the first and second embodiments, a card UI having the function of displaying a list of file contents found by a search based on keywords included in the prompt 3100, and the function of receiving the selection of a file content by the user is provided.

Such a card UI has the following advantages. In the first and second embodiments, descriptions have been given mainly taking as an example a card UI that requires the entry of information uniquely specifying a file content that is to be printed. For example, in Fig. 4A, the prompt 3100 including the file name 3110 indicating "Sample1.pdf' is entered. This entry method enables the execution of printing with a few procedures in a case where the user recognizes the file name of a file content that is to be operated. On the other hand, an issue exists where, in a case where the user does not recognize the file name, the user needs to search for a file content present on the cloud storage and identify the file name 3110 indicating "Sample1.pdf", and therefore, an operation of the user occurs inside and outside the Al assistant 3000. In contrast, in the third embodiment, the plugin server 6000 performs the process of searching for a file content on behalf of the user as processing in the plugin server 6000. As a result, the work of the user on the cloud storage becomes unnecessary, and it is possible to seamlessly execute processing from the search for a file content to the execution of printing in the AI assistant 3000.

In the first and second embodiments, an example of a card UI that receives an instruction that does not uniquely specify a file content has also been taken. For example, in the description of Fig. 4C, the abstract file specifying 3111 indicating "the materials for tomorrow's meeting" is received, and at this time, a process in which the work data acquisition control unit 3022 of the Al assistant 3000 searches for materials corresponding to "the materials for tomorrow's meeting" and passes the found materials when the print plugin server is called is required. However, as the issue of this card UI, there can be a case where a plurality of search results such as "Sample1.pdf", "Sample2.pptx", and "Sample3.docx" is found as the materials corresponding to "the materials for tomorrow's meeting", and further, there can also be a case where a file content that is to be actually printed is only one, such as "Sample1.pdf", among the plurality of search results. Although the above-described cases are merely examples, in a case where the system performs the process of receiving the abstract file specifying 3111 and searching for a file content on behalf of the user, a method for selecting an appropriate file content from the search results is required. As an example of this method, in the third embodiment, a card UI having the function of receiving the selection of a file content by the user is provided, so that the intention of the user is reflected on the selection of a file content.

Based on the above-described advantage, in the third embodiment, a card UI having the function of displaying a list of file contents found by a search based on keywords included in the prompt 3100, and the function of receiving the selection of a file content by the user is provided. The system configuration, the hardware configurations, the software configurations, examples of a card update UI, and a card template are similar to those in the first and second embodiments, and therefore are not described. The following description is given particularly focusing on portions different from the first and second embodiments.

### <Examples of Card Post UI>

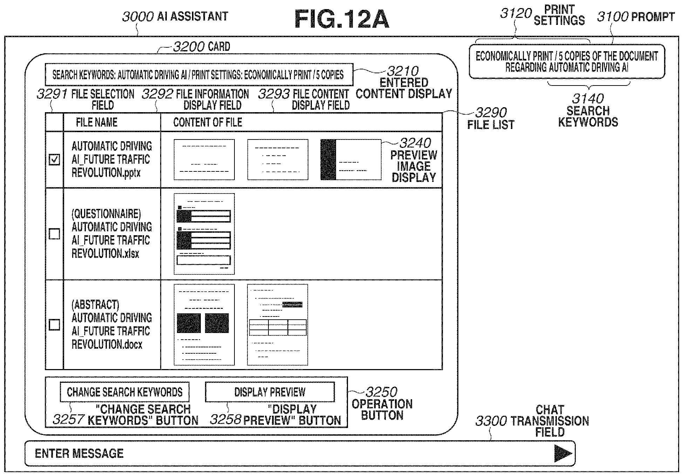

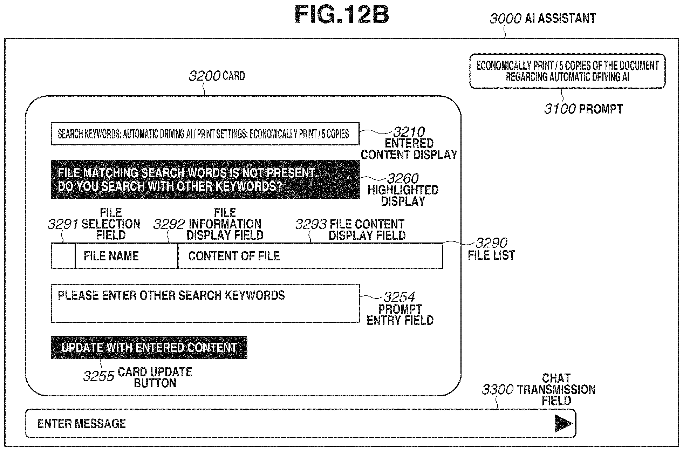

With reference to Figs. 12A and 12B, a description is given of examples of a card UI having the function of displaying a list of file contents found by a search based on keywords included in the prompt 3100, and the function of receiving the selection of a file content by the user according to the third embodiment.

Fig. 12A illustrates an example of a card UI in a case where the plugin server 6000 succeeds in searching for an appropriate file content. In this example, the entry of the prompt 3100 indicating "Economically print / 5 copies of the document regarding automatic driving Al" is received. At this time, the prompt 3100 requests two parameters, namely search keywords 3140 such as "automatic driving Al" and the print settings 3120 such as "economically print / 5 copies". However, these two parameters may not necessarily need to be entered by the user, and may be obtained by the processing of the plugin server 6000. For example, in a case where the search keywords 3140 are empty, the process of searching for a recently operated file instead of a file name may be executed. Alternatively, in a case where the print settings 3120 are empty, a character string such as "normal printing" may be input to the print setting parameter and treated as an input to the generative Al model unit 6020.

The card 3200 includes the entered content display 3210 that displays information extracted from the prompt 3100, such as "search keywords: automatic driving Al" and "print settings: economically print / 5 copies", a file list 3290 indicating the result of searching the cloud storage based on the search keywords 3140 such as "automatic driving Al", and the operation buttons 3250 for receiving a subsequent operation of the user.

The file list 3290 is a display in a table format having rows indicating up to three file contents and has the column of a file selection field 3291 displaying a checkbox, the column of a file information display field 3292 displaying a file name as a character string, and the column of a file content display field 3293 displaying a preview of up to three pages from the beginning of a file content as an image. The contents and the order of displays in the file list 3290 are not particularly limited. For example, rows indicating more than three file contents may be displayed, or an additional column may be displayed by, for example, providing an operation button associated with a file content. Alternatively, a scrolling function enabled according to the number of rows or columns may be provided, or the function of performing manual filtering by the user based on the last update date and time or the extension may be provided. The function of executing any processing on an element displayed in a cell may be provided. For example, the character string of a file name is selected, whereby it is possible to launch a client application capable of executing a file content. A preview image is selected, whereby it is also possible to display the details of the image in an enlarged manner or display pages that cannot be displayed due to space limitations in the file list 3290.

The file selection field 3291 is a column displaying a checkbox for receiving the selection of a file content by the user. When a "display preview" button 3258 is selected, information regarding the on and off states of the checkbox is provided to the plugin server 6000. In the file selection field 3291, the number of checkboxes that can be selected at a time is not particularly limited. No checkbox may be checked, or a plurality of checkboxes may be simultaneously selected. Additionally, the content of subsequent processing may be changed according to the number of selected checkboxes. For example, while no checkbox is selected, the "display preview" button 3258 may be set to be inoperable. Alternatively, in a case where the "display preview" button 3258 is selected in the state where a plurality of checkboxes is selected, additional cards may be posted for the purpose of controlling each file content as an individual card. The method for selecting a file content is not limited to a checkbox. For example, operation buttons 3250 associated with a file content may be directly displayed in a cell, and the selection of the file content and the display of a preview may be collectively executed in a single step.

The file information display field 3292 is a column displaying information associated with a file content acquired from the application 2000 or the external system server 7000, and the types and the number of pieces of information displayed in the file information display field 3292 are not particularly limited. For example, the last update date and time or the creator's name of the file content, a file icon based on the extension, or the like may be displayed. Alternatively, a plurality of elements as described above may be displayed in different columns, or may be displayed in any arrangement in a single cell.

The file content display field 3293 is a column displaying complementary information created by the plugin server 6000 to assist the user in selecting a file content, and the types and the number of pieces of information displayed in the file content display field 3293 are not particularly limited. For example, the summary of the file content created by the plugin server 6000 may be displayed as a character string. Similarly to the file information display field 3292, a plurality of elements may be displayed in different columns, or may be displayed in any arrangement in a single cell.

The operation buttons 3250 include a "change search keywords" button 3257 and the "display preview" button 3258. The arrangement and the contents of buttons displayed as the operation buttons 3250 are not particularly limited. For example, a button that provides the function of displaying another search result that cannot be displayed due to space limitations on the card 3200 or the like may be displayed.

The "change search keywords" button 3257 provides the function of searching for a file content again using new search keywords as an input, and updating the card 3200. UX when the "change search keywords" button 3257 is executed is not particularly limited. For example, as illustrated in Fig. 5A, in a case where the "change search keywords" button 3257 is selected, the prompt entry field 3254 and the card update button 3255 may be displayed. In a case where the card update button 3255 is selected, a search process may be performed using the prompt 3100 entered into the prompt entry field 3254 as new search keywords.

The "display preview" button 3258 provides the function of adapting the print settings 3120 such as "economically print / 5 copies" in the prompt 3100 to a file content selected in the file selection field 3291 by the user and updating the card 3200 to display the result of the adaptation. A card UI displayed after the "display preview" button 3258 is executed is not particularly limited. For example, the card 3200 including the entered content display 3210, the generation reason display 3220, the print settings display 3230, the preview image display 3240, and the operation buttons 3250 as illustrated in Fig. 4A may be displayed.

Fig. 12B illustrates an example of a card UI in a case where the plugin server 6000 fails to search for an appropriate file content. In Fig. 12B, the card 3200 displays the entered content display 3210, the highlighted display 3260, the file list 3290, the prompt entry field 3254, and the card update button 3255. At this time, to indicate that a file matching the search is not present in the file list 3290, a row indicating a file content is not displayed. However, the file list 3290 and the UI of the card 3200 are not limited to these.

### <Example of Sequence>

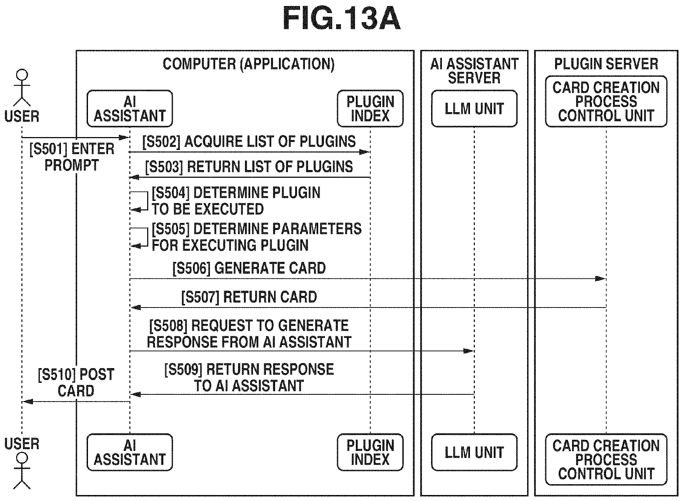

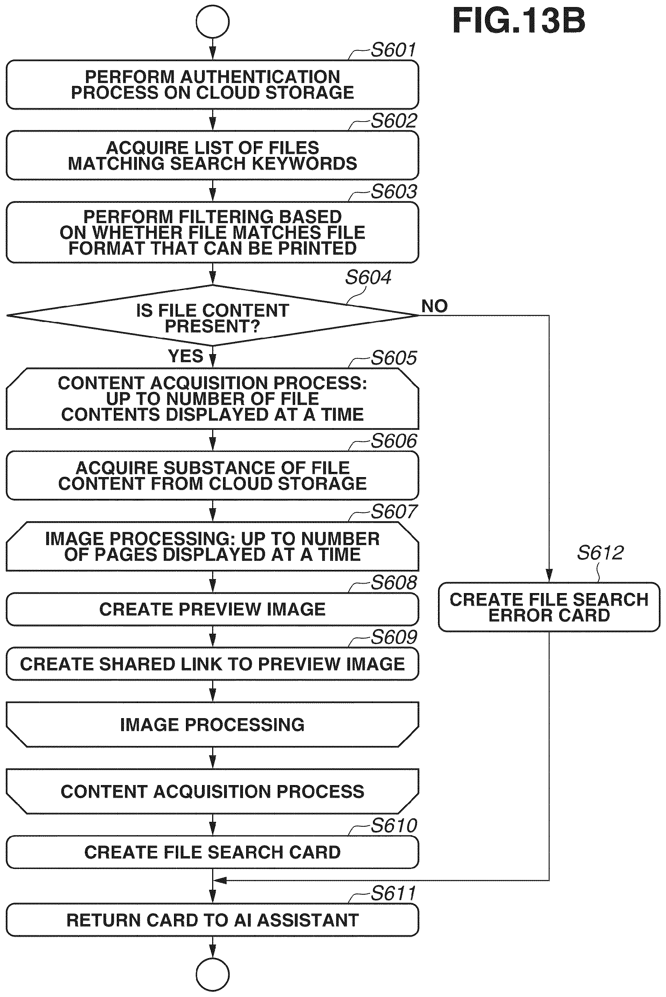

With reference to Figs. 13A and 13B, a description is given of a plugin 5000 calling sequence when the card 3200 is created and a card creation sequence of the card creation process control unit 6010 according to the third embodiment. The application 2000 is executed by the CPU 141, and the card creation process control unit 6010 is executed by the CPU 641. An application calling sequence when the card 3200 is updated according to the third embodiment is similar to the application calling sequences according to the first and second embodiments, and therefore is not described.

With reference to Fig. 13A, a description is given of the plugin 5000 calling sequence when the card 3200 is created according to the third embodiment. However, most of the processing content of the sequence illustrated in Fig. 13A is similar to the sequence according to the first embodiment illustrated in Fig. 6A. The third embodiment is different from the first embodiment in that in the plugin 5000 calling sequence, the generative Al model unit 6020 is not used to create the file list 3290, and therefore, the exchanges between the card creation process control unit 6010 and the generative AI model unit 6020 performed in steps S107 and S108 do not exist. Thus, in the sequence according to the third embodiment, in steps S501 to S506, processes similar to those of steps S101 to S106 are performed, and in steps S507 to S510, processes similar to those of steps S109 to S112 are performed (the processing content of the processes are not described).

In this example, the difference between the first and third embodiments has been described based on the premise that the application 2000 performs exchanges with the plugin server 6000 via the AI assistant 3000 as in the first embodiment. However, also in a case where the application 2000 directly performs exchanges with the application server 9000 including the generative AI model unit 6020 not via the AI assistant 3000 as in the second embodiment, the plugin 5000 calling sequence according to the second embodiment is different from the plugin 5000 calling sequence according to the third embodiment in the presence or absence of exchanges with the generative Al model unit 6020.

Next, with reference to Fig. 13B, the card creation sequence of the card creation process control unit 6010 according to the third embodiment is described. In the third embodiment, unlike the first and second embodiments, a card having the function of displaying a list of file contents found by a search based on keywords included in the prompt 3100, and the function of receiving the selection of a file content by the user is created. Hereinafter, the card 3200 having these functions as illustrated in Fig. 12A is referred to as a "file search card". At the same time, the card 3200 indicating that a search for a file content fails as illustrated in Fig. 12B is referred to as a "file search error card". The processing illustrated in this flowchart is executed by the CPU 641 of the plugin server 6000 controlling the card creation process control unit 6010 and the content management unit 6040.

This processing is the details of the card generation process described in step S506. The start timing of this processing is when the AI assistant 3000 transmits a request to generate the card 3200 to the plugin server 6000 (step S506). At this time, the card creation process control unit 6010 starts a card 3200 generation process.

As described in the examples of the card post UI according to the third embodiment, at least two parameters, namely the search keywords 3140 and the print settings 3120, are input to the print plugin server. Each apparatus communicates via the network communication unit included in the apparatus.

In step S601, to acquire a list of file contents matching the search keywords 3140 entered by the user, the card creation process control unit 6010 controlled by the CPU 641 performs an authentication process on the cloud storage used by the user. For example, authentication information regarding the user is input when the user adds the plugin 5000 to the application 2000, or when the plugin 5000 is initially executed, or the like. Then, the authentication process is executed using this information.

Next, in step S602, the CPU 641 transmits a request to the cloud storage and acquires a list of files matching the search keywords 3140. The format of the list of files conforms to the specifications of the cloud storage to which the request is transmitted, and for example, corresponds to data in the JSON format or the like. Although in this flowchart, in step S602, information such as the file name displayed in the file information display field 3292 can be acquired, a request to acquire detailed information such as the last update date and time and the creator name separately from the request transmitted in step S602 may be present.

In step S603, the CPU 641 performs filtering in the list of files acquired in step S602 based on whether a file matches a file format that can be printed. Examples of the file format that can be printed include files having extensions in the Office format, such as ".docx", ".pptx", and ".xlsx", extensions in the Portable Document Format (PDF) format, such as ".pdf", and extensions in image formats, such as ".jpeg" and ".png". The content of the filtering performed in step S603 conforms to the specifications of the plugin 5000. For example, the filtering may be performed based on the size of the file, the presence or absence of access restriction, a format with which a printer to perform printing is compatible, or the like.

In step S604, the CPU 641 determines whether a file content passing through the filtering performed in step S603 is present. In a case where a file content is present (YES in step S604), then in step S605, the CPU 641 repeats a content acquisition process up to the number of file contents displayed at a time in the file list 3290. As the specific processing content of the repetition, first, in step S606, the CPU 641 acquires the substance of a file content from the cloud storage. Next, in step S607, the CPU 641 repeats image processing up to the number of pages displayed in the file content display field 3293. As the specific processing content of this repetition, in step S608, the CPU 641 creates a preview of a page as a processing target for checking the content of the file content. This preview image is saved in the content management unit 6040 of the plugin server 6000. The method for selecting a page to create a preview image is not limited to this. For example, semantic separations in the file content may be distinguished using the CPU 641, and the first page of each chapter may be converted into a preview image. Then, in step S609, the content management unit 6040 controlled by the CPU 641 creates a shared link to the preview image for the card 3200 to refer to.

After the repetitions defined in steps S607 and S605 are completed, then in step S610, the card creation process control unit 6010 controlled by the CPU 641 creates a file search card. Then, in step S611, the CPU 641 returns the created card to the Al assistant 3000.

If, on the other hand, a file content passing through the filtering is not present in step S604 (NO in step S604), then in step S612, the CPU 641 creates a file search error card. In step S611, the CPU 641 also returns the created card to the Al assistant 3000.

As described above, in the third embodiment, a card having the function of displaying a list of file contents found by a search based on keywords included in the prompt 3100, and the function of receiving the selection of a file content by the user is provided, whereby it is possible to solve the issues in the first and second embodiments.

### <Other Embodiments>

The present disclosure can also be implemented by supplying a program that realizes one or more functions of the above-described embodiments to a system or apparatus via a network or a storage medium, and causing one or more processors of a computer in the system or apparatus to read and execute the program. Furthermore, the disclosure can also be implemented by a circuit (for example, an ASIC) that realizes one or more functions.

According to the present disclosure, the identification of a file as a target of print settings indicated in natural-language text by a user is facilitated.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments, but is defined by the scope of the appended claims.

## Claims

1. An information processing method, comprising:
acquiring a file;
receiving, in response to a user entering natural-language text into a first entry field, a first setting that is based on the entered natural-language text and is to be used to print the acquired file;
displaying, in response to acquisition of the file and reception of the first setting, an object that does not include the first entry field and includes a second entry field for receiving information regarding the acquired file and natural-language text for setting a second setting to be used to print the file from the user; and
setting the second setting that is to be used to print the acquired file and based on the natural-language text in the second entry field entered by the user.

2. The method according to claim 1,
wherein the first setting is set by inputting the natural-language text in the first entry field entered by the user into generative AI, and
wherein the second setting is set by inputting the natural-language text in the second entry field entered by the user into generative AI.

3. The method according to claim 1 or 2, further comprising:
inputting the natural-language text entered in the first entry field into generative Al; and
receiving first information that has been generated by the generative Al and is to be used to set the first setting,
wherein in the setting, the first setting that is to be used to print the acquired file and is based on the received first information is set.

4. The method according to claim 3,
wherein in the inputting, the natural-language text entered in the second entry field is input into generative Al,
wherein in the receiving, second information that has been generated by the generative Al and is used to set the second setting in the setting is received, and
wherein in the setting, the second setting based on the second information that has been received is set.

5. The method according to claim 3 or 4, further comprising:
generating the object based on the acquired file, the natural-language text entered in the first entry field, and the first information that has been received,
wherein in the displaying, the object generated in the generating is displayed.

6. The method according to any one of the preceding claims, wherein a character string indicating the first setting is further displayed on the object.

7. The method according to claim 6, wherein in the displaying, a second object that displays a character string indicating the second setting is displayed in response to the second setting being set in the setting.

8. The method according to any one of claims 1 to 5, wherein in the displaying, a character string indicating the second setting is displayed on the object in response to the second setting being set in the setting.

9. The method according to claim 8, wherein in a case where the character string indicating the second setting is displayed on the object, a character string indicating the first setting is not displayed.

10. The method according to any one of claims 1 to 9, wherein a first image representing the file is further displayed on the object.

11. The method according to claim 10, wherein the first image displayed is an image that is based on the first setting and is a preview image of the file.

12. The method according to claim 11, wherein a second image that is an image based on the second setting and is a preview image of the file is displayed on the object in response to the second setting being set.

13. The method according to claim 12, wherein in a case where the second image is displayed on the object, the first image is not displayed.

14. The method according to any one of claims 1 to 13, wherein the file is printed based on the second setting.

15. The method according to claim 14, wherein a character string indicating that the file has been printed is displayed on the object in response to the file having been printed.

16. The method according to any one of claims 1 to 15, wherein in a case where setting of the second setting has failed in the setting, a character string indicating that setting of the second setting has failed is displayed on the object.

17. The method according to claim 16, wherein a reason for the failure of setting the second setting is further displayed on the object.

18. The method according to any one of claims 1 to 17, wherein the first entry field and the second entry field are displayed on the same screen.

19. The method according to any one of claims 1 to 18, wherein the object is displayed, in response to the natural-language text being entered into the first entry field by the user, in an area where the natural-language text entered is displayed.

20. A computer program comprising instructions which, when the program is executed by a computer, cause the computer to carry out the method according to any one of the preceding claims.
